# EUROPÄISCHE PATENTSCHRIFT

(11) **EP 4 185 495 B1**
(45) Veröffentlichungstag und Bekanntmachung des Hinweises auf die Patenterteilung: **26.06.2024**
(21) Anmeldenummer: 21743119.6
(22) Anmeldetag: 08.07.2021
(51) Int. Cl.: B60S 1/48, B60S 1/56, F16K 11/00, G02B 27/00, B08B 3/02, B08B 5/02, B60S 1/54

(54) **REINIGUNGSVORRICHTUNG, SENSORREINIGUNGSMODUL, FAHRZEUG UND VERFAHREN ZUM BETREIBEN EINER REINIGUNGSVORRICHTUNG**
CLEANING DEVICE, SENSOR CLEANING MODULE, VEHICLE, AND METHOD FOR OPERATING A CLEANING DEVICE
DISPOSITIF DE NETTOYAGE, MODULE DE NETTOYAGE DE CAPTEUR, VÉHICULE, ET PROCÉDÉ POUR FAIRE FONCTIONNER UN DISPOSITIF DE NETTOYAGE

(30) Priorität: 23.07.2020 DE 102020119474; 10.08.2020 DE 102020121016
(43) Veröffentlichungstag der Anmeldung: 31.05.2023
(73) Patentinhaber: ZF CV Systems Global GmbH, 3006 Bern (CH)
(72) Erfinder: COHRS, Jan, 30173 Hannover (DE); FIEBRANDT, Jan, 30171 Hannover (DE)
(74) Vertreter: Ohlendorf, Henrike
(86) Internationale Anmeldenummer: PCT/EP2021/068925
(87) Internationale Veröffentlichungsnummer: WO 2022/017808

(56) Entgegenhaltungen:
- US-A1- 2017 168 291
- US-A1- 2018 290 631
- US-A1- 2020 130 651
- US-B2- 10 286 877

## Beschreibung

Die Erfindung betrifft eine Reinigungsvorrichtung zum Bereitstellen eines Flüssigkeits-Reinigungsimpulses und/oder eines Druckluft-Reinigungsimpulses gemäß dem Oberbegriff des Anspruchs 1. Die Erfindung betrifft weiter ein Sensorreinigungsmodul, ein Fahrzeug und ein Verfahren zum Betreiben einer Reinigungsvorrichtung.

Reinigungsvorrichtungen für Fahrzeuge zum Bereitstellen eines Flüssigkeits-Reinigungsimpulses und eines Druckluft-Reinigungsimpulses sind allgemein bekannt. Als Beispiele solcher Vorrichtungen sind die US 2018/290631 A1 und die US 10 286 877 B2 genannt.

Dabei hat es sich generell als vorteilhaft erwiesen, in einer Reinigungsvorrichtung einen Druckzylinder vorzusehen, der sowohl eine Luftkammer als auch eine Flüssigkeitskammer aufweist, um mit relativ geringem apparativen Aufwand, insbesondere mit nur einer Druckquelle, sowohl einen Flüssigkeits-Reinigungsimpuls als auch einen Druckluft-Reinigungsimpuls bereitzustellen.

So beschreibt beispielsweise die EP 3 168 094 B1 ein System zum Reinigen einer externen, am Fahrzeug montierten Sensoroberfläche, aufweisend eine Luftdüse, welche dazu ausgerichtet ist, Luft auf eine Sensoroberfläche auszugeben; eine Luftpumpe, welche einen Fluideinlass, einen Luftauslass, eine Luft-Fluid-Grenzfläche und eine variable Volumenkompressionskammer, welche mit dem Luftauslass kommuniziert, aufweist; mit einer Luftflusssteuerungseinrichtung, welche mit der Luftdüse und dem Luftauslass kommuniziert, um den Luftfluss dadurch zu steuern; und einer Flüssigkeitspumpe, welche mit dem Fluideinlass kommuniziert, um einen Fluss von unter Druck stehender Flüssigkeit liefert, so dass sich das Volumen der Kompressionskammer ändert, um ein Volumen von Druckluft mit einem Absolutdruck unter 10 bar zu erzeugen.

Derartige Ansätze sind jedoch weiter verbesserungswürdig, insbesondere was die individuelle Steuerung der Reinigungsimpulse und insbesondere eine von einem Flüssigkeits-Reinigungsimpuls unabhängige Steuerung des Druckluft-Reinigungsimpuls betrifft.

Wünschenswert ist es daher, die Funktion der Reinigungsvorrichtung hinsichtlich der Steuerbarkeit, insbesondere der Steuerbarkeit der Reinigungsimpulse, zu verbessern, und gleichzeitig den apparativen Aufwand hierzu möglichst gering zu halten.

An dieser Stelle setzt die Erfindung an deren Aufgabe es ist, eine verbesserte Reinigungsvorrichtung anzugeben, bei dem insbesondere die Möglichkeit zur Steuerung einzelner Reinigungsimpulse verbessert ist.

Die Aufgabe, betreffend die Reinigungsvorrichtung, wird durch die Erfindung in einem ersten Aspekt mit einer Reinigungsvorrichtung des Anspruchs 1 gelöst.

Die Erfindung geht aus von einer Reinigungsvorrichtung für ein Fahrzeug zum Bereitstellen eines Flüssigkeits-Reinigungsimpulses für mindestens eine Reinigungsdüse, aufweisend:
- einen Moduldruckluftanschluss zum Annehmen von Druckluft,
- einen Druckzylinder mit einem Zylindervolumen, aufweisend ein bewegliches Trennmittel, das das Zylindervolumen in eine Druckluft aufnehmende Luftkammer und eine Reinigungsflüssigkeit aufnehmende Flüssigkeitskammer fluiddicht aufteilt, wobei
- die Luftkammer einen Luftkammer-Anschluss aufweist, der mit Druckluft zum Füllen der Luftkammer beaufschlagbar ist, wobei bei einem Füllen der Luftkammer durch Bewegen des Trennmittels gegen eine Rückstellkraft und Vergrößern der Luftkammer ein Verkleinern der Flüssigkeitskammer erfolgt, wodurch Reinigungsflüssigkeit in Form des Flüssigkeits-Reinigungsimpulses über einen Flüssigkeitskammer-Anschluss der Flüssigkeitskammer an einer Flüssigkeits-Düsenleitung bereitgestellt wird.

Erfindungsgemäß ist bei der Reinigungsvorrichtung ein Schaltventil vorgesehen, das ausgebildet ist zum Herstellen einer pneumatischen Verbindung zwischen dem Moduldruckluftanschluss und dem Luftkammer-Anschluss in einer Belüftungsstellung.

Erfindungsgemäß ist bei der Reinigungsvorrichtung weiter ein Bypassventil vorgesehen, das ausgebildet ist zum Herstellen einer pneumatischen Verbindung zwischen dem Moduldruckluftanschluss und der Druckluft-Düsenleitung vorbei an dem Schaltventil in einer Öffnungsstellung zum Bereitstellen einer Bypass-Druckluftströmung.

Die Erfindung geht von der Überlegung aus, dass ein Druckzylinder grundsätzlich vorteilhaft in einer Reinigungsvorrichtung eingesetzt werden kann, um unter relativ geringem apparativen Aufwand, insbesondere mit nur einer Druckquelle, sowohl einen Flüssigkeits-Reinigungsimpuls als auch einen Druckluft-Reinigungsimpuls zu erzeugen. Dies wird insbesondere mit einem innerhalb des Druckzylinders angeordneten, bewegbaren Trennmittels erreicht, welches das Zylindervolumen in eine Luftkammer und eine Flüssigkeitskammer, jeweils mit variablem Volumen, aufteilt und dabei beide Kammern voneinander dichtend abtrennt. Durch dieses Trennmittel ist eine Druckübertragung zwischen der Druckluft und der Reinigungsflüssigkeit möglich, wodurch eine Druckluftquelle, insbesondere eine Flüssigkeitspumpe für die Reinigungsflüssigkeit, eingespart werden kann, weil die Druckbeaufschlagung der Reinigungsflüssigkeit mittels der Druckluftquelle erfolgen kann.

In der unter dem Aktenzeichen 10 2019 111 468.3 angemeldeten, noch nicht veröffentlichten Deutschen Patentanmeldung, die nur in Bezug auf Neuheit betreffend den vorliegenden Anmeldungsgegenstand relevant ist, ist grundsätzlich eine Reinigungsvorrichtung der vorgenannten Art zum Beaufschlagen einer Oberfläche mit einem Mediumspuls, insbesondere einer Oberfläche eines Sensors, vorzugsweise eines optischen Sensors, insbesondere eines Umgebungserfassungssensors, beschrieben. Die Reinigungsvorrichtung weist auf:
- einen Druckzylinder, mit einem Druckanschluss, einem Mediumsanschluss und einem ersten Düsenanschluss, wobei
- im Druckzylinder ein Trenn- und Verdrängungsmittel mit einer ersten und/oder zweiten Druckgeberfläche angeordnet ist, zum Unterteilen des Volumens des Druckzylinders in eine erste Mediumskammer und eine zweite Mediumskammer und zum Verändern eines Volumens der ersten und zweiten Mediumskammer.

Die Reinigungsvorrichtung weist grundsätzlich auch ein Schaltventil der vorgenannten Art auf; nämlich ein Schaltventil, das einen ersten Druckzylinderanschluss, einen ersten Mediumsquellenanschluss und einen zweiten Düsenanschluss aufweist und ausgebildet ist zum Schalten in einen ersten Schaltzustand und einen zweiten Schaltzustand, wobei
- im ersten Schaltzustand die erste Mediumskammer über den Druckanschluss mit dem ersten Mediumsquellenanschluss verbindbar ist, zum Verringern des Volumens der zweiten Mediumskammer, und
- im zweiten Schaltzustand die erste Mediumskammer über den Druckanschluss mit dem zweiten Düsenanschluss verbindbar ist, zum Vergrößern des Volumens der zweiten Mediumskammer,
- derart, dass die Oberfläche beaufschlagbar ist mit
- einem Mediumspuls eines flüssigen Mediums, und/oder
- einem Mediumspuls eines gasförmigen Mediums.

Die Erfindung schließt darüber hinaus die Erkenntnis ein, dass eine Möglichkeit einer - von dem Druckzylinder unabhängigen - Steuerung einer zusätzlichen Bypass-Druckluftströmung sinnvoll ist. Das Bypassventil stellt insbesondere die Bypass-Druckluftströmung an der Druckluft-Düsenleitung und/oder dem Düsen-Druckluftanschluss bereit. Das Bypassventil ist insbesondere ausgebildet zum Trennen der pneumatischen Verbindung zwischen dem Moduldruckluftanschluss und der Druckluft-Düsenleitung in einer Schließstellung.

Im Unterschied zu einer Erzeugung eines Druckluft-Reinigungsimpuls des mit dem Druckzylinder, der durch das Trennmittel stets eine vorherige Beaufschlagung mit einem Flüssigkeits-Reinigungsimpuls erfordert -kann mittels eines Bypassventils unabhängig vom Druckzylinder - und insbesondere beliebig oft - eine Bypass-Druckluftströmung bereitgestellt werden (insbesondere um eine Sensoroberfläche beliebig oft mit Druckluft zu beaufschlagen). Durch eine vom Druckzylinder unabhängige Bereitstellung einer Druckluftströmung kann insbesondere in Fällen, in denen keine Reinigungsflüssigkeit benötigt wird - beispielsweise bei Regen - die Reinigungsvorrichtung in vorteilhaft flüssigkeitssparender Weise betrieben werden. Auch wird in einem solchen Fall vorteilhaft der Druckzylinder nicht unnötig mechanisch beansprucht. Schließlich ermöglicht ein erfindungsgemäßes Bypassventil eine direkte bzw. direktere pneumatische Verbindung der Reinigungsdüse mit dem Moduldruckluftanschluss, wodurch vorteilhaft ein höherer Druck der für die Reinigungsdüse bereitgestellten Druckluft, insbesondere der Bypass-Druckluftströmung, erreicht werden kann, insbesondere verglichen mit einem Druckluft-Reinigungsimpuls, der über das - durch die Rückstellkraft zurückbewegte - Trennmittel erzeugt wird.

Die Reinigungsvorrichtung ist insbesondere ausgebildet zum mittelbaren oder unmittelbaren Anschließen einer Reinigungsdüse zum Beaufschlagen einer Sensoroberfläche mit dem Flüssigkeits-Reinigungsimpuls und/oder dem Druckluft-Reinigungsimpuls.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Das Schaltventil ist insbesondere ausgebildet zum Trennen der pneumatischen Verbindung zwischen dem Moduldruckluftanschluss und dem Luftkammer-Anschluss in einer Entlüftungsstellung. Das Schaltventil ist insbesondere ausgebildet zum Herstellen einer pneumatischen Verbindung zwischen dem Luftkammer-Anschluss und einer Druckluft-Düsenleitung zum Bereitstellen des Druckluft-Reinigungsimpulses durch Zurückbewegen des Trennmittels durch die Rückstellkraft in einer Entlüftungsstellung, zum Bereitstellen eines Druckluft-Reinigungsimpulses an der Druckluft-Düsenleitung.

Im Rahmen einer Weiterbildung ist vorgesehen, dass das Bypassventil als ein 2/2-Wegeventil, insbesondere 2/2-Wege-Magnetventil und/oder Patronenventil, ausgebildet ist. Das 2/2 Wegeventil ist bevorzugt als normal schließendes Ventil ausgebildet. "Normal schließendes Ventil" bedeutet, dass sich das 2/2-Wegeventil im nicht angesteuerten, insbesondere nicht bestromten, Zustand in seiner Schließstellung befindet,

Im Rahmen einer Weiterbildung ist vorgesehen, dass das Bypassventil als eine Anordnung aus einem 3/2 Wegeventil und einem Schnellentlüftungsventil gebildet ist, wobei
- das 3/2 Wegeventil ausgebildet ist zum Herstellen einer pneumatischen Verbindung zwischen dem Moduldruckluftanschluss und dem Schnellentlüftungsventil in einer Öffnungsstellung, und zum Herstellen einer pneumatischen Verbindung zwischen dem Schnellentlüftungsventil und einem Entlüftungsanschluss des 3/2 Wegeventils in einer Schließstellung,
- das Schnellentlüftungsventil zwischen dem Bypassventil und der Druckluft-Düsenleitung oder in einer Druckluft-Düsenanschlussleitung angeordnet und ausgebildet ist zum Annehmen der Bypass-Druckluftströmung und zum Bereitstellen eines Bypass-Druckluft-Reinigungsimpulses. Insbesondere ist das Schnellentlüftungsventil zwischen dem Bypassventil und der Druckluft-Düsenleitung angeordnet. In einer derartigen Weiterbildung ist das Bypassventil ausgebildet, den Bypass-Druckluft-Reinigungsimpuls bereitzustellen, wenn sich das 3/2 Wegeventil in der Schließstellung befindet. Das Schnellentlüftungsventil weist insbesondere einen Druckluftpuffer auf. Das 3/2 Wegeventil ist bevorzugt als normal öffnendes Ventil ausgebildet. "Normal öffnendes Ventil" bedeutet, dass sich das 3/2-Wegeventil im nicht angesteuerten, insbesondere nicht bestromten, Zustand in seiner Öffnungsstellung befindet, und nur in seine - das Schnellentlüftungsventil an seinem zweiten Anschluss zur Abgabe des Bypass-Druckluft-Reinigungsimpuls entlüftende - Schließstellung geschaltet wird, wenn ein Bypass-Druckluft-Reinigungsimpuls bereitgestellt werden soll. Insbesondere ist das Schnellentlüftungsventil zwischen dem Bypassventil und der Reinigungsdüse angeordnet.

Mittels eines Schnellentlüftungsventils kann vorteilhaft ein Bypass-Druckluft-Reinigungsimpuls zum Beaufschlagen auf die Sensoroberfläche erzeugt werden, welcher vorteilhaft einen höheren Druck und/oder eine verbesserte Reinigungsleistung aufweist, insbesondere verglichen mit einer kontinuierlichen Strömung, beispielsweise einer Bypass-Druckluftströmung. Der Entlüftungsanschluss ist insbesondere ausgebildet zum Entlüften in die Umgebung, insbesondere über einen geeigneten Auslass. In Weiterbildungen, in denen das Schnellentlüftungsventil möglichst nah an der Reinigungsdüse - insbesondere in der Druckluft-Düsenanschlussleitung oder in der Druckluft-Düsenleitung in der Nähe des Druckluft-Düsenanschlusses - angeordnet ist, kann vorteilhaft ein geringer Druckverlust und ein hoher Druck des Bypass-Druckluft-Reinigungsimpulses erreicht werden.

Das 3/2 Wegeventil kann insbesondere als Patronenventil ausgebildet sein, wobei insbesondere ein am Ventilsitz des Patronenventils angeordneter Anschluss als Entlüftungsanschluss genutzt wird. Ein als Patronenventil ausgebildetes 2/2-Wegeventil oder 3/2-Wegeventil kann vorteilhaft in ein als Ventilpatronengehäuse ausgebildetes Gehäuse einer als Sensorreinigungsmodul ausgebildeten Reinigungsvorrichtung integriert werden. Ein Patronenventil ist ein standardisierte Abmaße aufweisendes, insbesondere einen standardisierten Durchmesser aufweisendes und im Wesentlichen zylindrisch ausgebildetes, pneumatisches oder hydraulisches Ventil, das in einen ebenfalls standardisierten Ventileinsatz eines Ventilpatronengehäuses passt. Ein Patronenventil kann insbesondere vereinfacht ausgetauscht werden, insbesondere zwecks Wartung und/oder Reparatur.

Im Rahmen einer Weiterbildung ist vorgesehen, dass das Schaltventil und das Bypassventil zusammen als ein Kombinationsventil ausgebildet sind, wobei das Kombinationsventil als 3/3-Wegeventil ausgebildet ist. Das 3/3-Wegeventil kann, insbesondere zusätzlich zu der Belüftungsstellung und der Entlüftungsstellung des Schaltventils, eine Bypassstellung als dritte Schaltstellung aufweisen, in welcher der Moduldruckluftanschluss pneumatisch mit der Druckluft-Düsenleitung verbunden wird, wodurch die Bypassstellung im Wesentlichen die Funktion des Bypassventils übernimmt. Durch ein 3/3-Wegeventil kann vorteilhaft ein kompakter Aufbau der Reinigungsvorrichtung erreicht werden.

Im Rahmen einer Weiterbildung ist vorgesehen, dass die Bypassleitung und die Druckluft-Düsenleitung gemeinsam als eine Leitung ausgebildet sind, die das Bypassventil mit dem Druckluft-Düsenanschluss pneumatisch verbindet. In einer derartigen Weiterbildung ist insbesondere der dritte Anschluss des Schaltventils nicht mit der Druckluft-Düsenleitung verbunden, sondern ist ausgebildet, in der Entlüftungsstellung direkt in die Umgebung zu entlüften.

Im Rahmen einer Weiterbildung ist ein Modulspeicher zum Speichern von Reinigungsflüssigkeit, und/oder eine Modulsteuereinheit, ausgebildet zum Ansteuern des Schaltventils und/oder des Bypassventils, und/oder ein Moduldruckluftspeicher, ausgebildet zum Speichern von Druckluft, vorgesehen. Mittels eines Modulspeichers kann vorteilhaft die Abhängigkeit von Flüssigkeitsquellen verringert werden, weil lokal in der Reinigungsvorrichtung ein Vorrat an Reinigungsflüssigkeit vorgehalten werden kann. Durch einen Moduldruckluftspeicher kann in analoger Weise die Abhängigkeit von Druckluftquellen verringert werden. Eine Modulsteuereinheit ermöglicht vorteilhaft die Kommunikation, insbesondere einen Signalaustausch, mit einer Fahrzeugsteuereinheit und/oder anderen Modulsteuereinheiten weiterer im Fahrzeug angeordneten Reinigungsvorrichtungen.

Im Rahmen einer Weiterbildung ist eine Düsenleitungs-Zusammenführung vorgesehen, die ausgebildet ist, die Flüssigkeits-Düsenleitung und die Druckluft-Düsenleitung fluidführend zu einer Kombinations-Düsenleitung zu verbinden. Insbesondere ist ein mit der Kombinations-Düsenleitung fluidführend verbundener Kombinations-Düsenanschluss vorgesehen, über den eine oder mehrere Reinigungsdüsen an die Reinigungsvorrichtung angeschlossen werden können.

Durch eine Kombinations-Düsenleitung und/oder ein Kombinations-Düsenanschluss kann vorteilhaft der apparative Aufwand zum Anschließen einer Reinigungsdüse an die Reinigungsvorrichtung oder an das Sensorreinigungsmodul reduziert werden, insbesondere die Anzahl der Leitungen reduziert werden. Eine Kombinations-Düsenleitung ist insbesondere als eine einzelne Leitung ausgebildet, durch die nacheinander oder gleichzeitig Druckluft und Reinigungsflüssigkeit geführt werden kann. In Weiterbildungen mit einer Kombinations-Düsenleitung kann in der Flüssigkeits-Düsenleitung und in der Druckluft-Düsenleitung jeweils ein Rückschlagventil vorgesehen werden, um zu verhindern, dass Druckluft in die Flüssigkeits-Düsenleitung, und dass Reinigungsflüssigkeit in die Druckluft-Düsenleitung gelangt. Bei Weiterbildungen mit einem oder mehreren Düsenventilen zum selektiven Aktivieren und Deaktivieren einzelner Reinigungsdüsen kann mit einer Kombinations-Düsenleitung vorteilhaft ein einfaches Düsenventil, insbesondere ein 2/2-Wegeventil verwendet werden, weil nur eine Leitung geschaltet werden muss.

Im Rahmen einer Weiterbildung ist ein Düsenleitungs-Verteilpunkt vorgesehen, der ausgebildet ist, die Kombinations-Düsenleitung und/oder die Flüssigkeits-Düsenleitung und/oder die Druckluft-Düsenleitung in mehrere Düsen-Zweigleitungen aufzuteilen. Die mehreren Düsen-Zweigleitungen sind insbesondere mit der aufgeteilten Düsenleitung fluidführend verbunden. Über eine Anzahl von Düsen-Zweigleitungen können vorteilhaft mehrere Reinigungsdüsen an eine Reinigungsvorrichtung und/oder ein Sensorreinigungsmodul angeschlossen werden, und auf diese Weise insbesondere Bauraum im Fahrzeug eingespart werden.

Im Rahmen einer Weiterbildung ist ein, in ein der Kombinations-Düsenleitung und/oder der Düsen-Zweigleitung angeordnetes, Düsenventil vorgesehen. Mittels eines Düsenventils kann vorteilhaft eine Reinigungsdüse unabhängig von einer oder mehreren anderen Reinigungsdüsen angesteuert werden, insbesondere auch dann, wenn diese eine oder mehreren anderen Reinigungsdüsen von derselben Reinigungsvorrichtung versorgt werden.

Im Rahmen einer Weiterbildung ist vorgesehen, dass das Sensorreinigungsmodul mindestens eine Reinigungsdüse aufweist, vorgesehen zum Beaufschlagen einer Sensoroberfläche mit dem Flüssigkeits-Reinigungsimpuls und/oder dem Druckluft-Reinigungsimpuls, wobei die Reinigungsdüse fluidführend mit der Druckluft-Düsenleitung und/oder der Flüssigkeits-Düsenleitung und/oder der Kombinations-Düsenleitung und/oder der Düsen-Zweigleitung verbunden ist. In einer Weiterbildung, in der die Reinigungsdüse in die Reinigungsvorrichtung und/oder das Sensorreinigungsmodul integriert ist, wird vorteilhaft ein kompakter und/oder Bauraum sparender Aufbau erreicht. In weiteren Weiterbildungen kann ein Abstand zwischen dem Sensorreinigungsmodul und der mindestens einen Reinigungsdüse vorteilhaft mit einer Düsenanschlussleitung überbrückt werden, welche ausgebildet ist, die Reinigungsdüse luft- und/oder fluidführend mit einem Düsen-Flüssigkeitsanschluss und/oder einem Düsen-Druckluftanschluss und/oder einem Düsen-Kombinationsanschluss des Sensorreinigungsmoduls zu verbinden. Generell ist es hinsichtlich möglichst geringer Druckverluste und dadurch von möglichst starken Druckluft- und/oder Flüssigkeits-Reinigungsimpulse vorteilhaft, die Leitungslänge einer Düsenanschlussleitung möglichst kurz zu halten.

Im Rahmen einer Weiterbildung ist vorgesehen, dass das Trennmittel ein axial entlang einer Zylinderachse bewegbarer und dichtend an einer Zylinderinnenwand des Druckzylinders anliegender Zylinderstempel ist, wobei der Zylinderstempel mit einer Rückstellfeder zum Erzeugen der Rückstellkraft im Druckzylinder gehalten wird. Ein Zylinderstempel stellt eine zuverlässige und kostengünstig zu realisierende Bauform eines Trennmittels dar. Gleichwohl sind andere Arten von Trennmitteln, beispielsweise flexible Membrane, möglich. Auch können mittels eines Zylinderstempels vorteilhaft hohe Drücke erreicht werden, insbesondere ein hoher Druck der Reinigungsflüssigkeit und des Flüssigkeits-Reinigungsimpulses. Ebenfalls wird mittels eines Zylinderstempels ein konstanter Verbrauch von Reinigungsmedien, insbesondere der Reinigungsflüssigkeit, erreicht. Der Druck des Flüssigkeits-Reinigungsimpulses kann mittels eines Zylinderstempels im Wesentlichen direkt über den Eingangsdruck des Systems, das heißt den Luftdruck mit dem der Luftkammer-Anschluss beaufschlagt wird, bestimmt werden. Wenn der Luftkammer-Anschluss mit einem höheren Druck beaufschlagt wird, wirkt eine entsprechend größere Kraft gegen den Zylinderstempel und die Rückhaltefeder. Daraus resultiert dann ein höherer Druck des Flüssigkeits-Reinigungsimpulses.

Im Rahmen einer Weiterbildung kann die Reinigungsvorrichtung, insbesondere in der Luftkammer-Leitung, ein steuerbares Druckregelventil, insbesondere ein elektronisch steuerbares Druckregelventil, aufweisen, um auf diese Weise den Druck, mit dem der Luftkammer-Anschluss beaufschlagt wird, selektiv zu steuern, und insbesondere somit auch den Druck des Flüssigkeits-Reinigungsimpulses.

Im Rahmen einer Weiterbildung ist eine Modulsteuereinheit vorgesehen, die ausgebildet ist zum Ansteuern der Ventile der Reinigungsvorrichtung, insbesondere des Schaltventils und/oder des Bypassventils und/oder des Düsenventils, und/oder ausgebildet ist zur Kommunikation zwischen der Reinigungsvorrichtung, und einer Fahrzeugsteuereinheit des Fahrzeugs, insbesondere über einen Fahrzeugbus. Der Fahrzeugbus kann insbesondere als CAN-Bus ausgebildet sein. Die Modulsteuereinheit kann ausgebildet sein, bidirektional zwischen Steuersignalen der Fahrzeugsteuereinheit und Schaltsignalen der Ventile der Reinigungsvorrichtung zu übersetzen und somit vorteilhaft als steuerungstechnische Schnittstelle zwischen einer Fahrzeugsteuereinheit des Fahrzeugs und der Reinigungsvorrichtung zu dienen.

Die Erfindung führt in einem zweiten Aspekt ein Sensorreinigungsmodul auf, aufweisend ein Modulgehäuse, insbesondere ein Ventilpatronengehäuse, und eine Reinigungsvorrichtung gemäß dem ersten Aspekt der Erfindung. In einem Sensorreinigungsmodul gemäß dem zweiten Aspekt werden die Vorteile der Reinigungsvorrichtung gemäß dem ersten Aspekt der Erfindung vorteilhaft genutzt. Durch eine Integration der Reinigungsvorrichtung in das Modulgehäuse, wird ein kompakter und geschützter Aufbau der Reinigungsvorrichtung erreicht. Bei Weiterbildungen, in denen das Modulgehäuse als Ventilpatronengehäuse gebildet ist, kann das Sensorreinigungsmodul vorteilhaft in einem Standardbauteil untergebracht werden. Ein Ventilpatronengehäuse ist insbesondere aus Aluminium oder Kunststoff oder dergleichen geeigneten Material als ein Block gebildet, in den durch geeignete Bearbeitungsverfahren eine Anzahl von Ventileinsätzen eingebracht ist mit entsprechenden Bohrungen oder dergleichen luft- und/oder fluidführenden Leitungen zwischen den Ventileinsätzen und/oder externen Anschlüssen. Ein Modulspeicher kann insbesondere in dem Ventilpatronengehäuse oder daran befestigt angeordnet sein.

Die Erfindung für den einem dritten Aspekt auf ein Fahrzeug, insbesondere einen PKW oder ein Nutzfahrzeug, aufweisend mindestens eine Reinigungsvorrichtung gemäß dem ersten Aspekt der Erfindung oder ein Sensorreinigungsmodul gemäß dem zweiten Aspekt der Erfindung.

Die Erfindung für den einem vierten Aspekt auf ein Verfahren zum Betreiben einer Reinigungsvorrichtung gemäß dem ersten Aspekt der Erfindung oder eines Sensorreinigungsmoduls gemäß dem zweiten Aspekt der Erfindung, gekennzeichnet durch die Reinigungsschritte:
- Schalten des Schaltventils in eine Belüftungsstellung zum Beaufschlagen des Luftkammer-Anschlusses zum Bereitstellen des Flüssigkeits-Reinigungsimpulses an der Flüssigkeits-Düsenleitung,
- Schalten des Schaltventils in eine Entlüftungsstellung zum Entlüften des Luftkammer-Anschlusses, dadurch
- Zurückbewegen des Trennmittels durch die Rückstellkraft zum Bereitstellen des Druckluft-Reinigungsimpulses an der Druckluft-Düsenleitung und zum Wiederauffüllen der Flüssigkeits-Kammer mit Reinigungsflüssigkeit.

In einer Weiterbildung des Verfahrens sind die Schritte vorgesehen:
- Prüfen anhand eines Reinigungs-Prüfsignals des Sensors, ob eine Reinigung der Sensoroberfläche erfolgt ist, insbesondere ob ein Flüssigkeits-Reinigungsimpuls auf die Sensoroberfläche abgegeben wurde,
- Bereitstellen eines negativen Reinigungs-Prüfsignals, wenn keine Reinigung der Sensoroberfläche erfolgt ist, insbesondere wenn kein Flüssigkeits-Reinigungsimpuls auf die Sensoroberfläche abgegeben wurde und
- einfaches oder mehrfaches Wiederholen der Reinigungsschritte, wenn das Reinigungs-Prüfsignal negativ ist. Bei einem einfachen Wiederholen erfolgt insbesondere nach jedem Durchgang der oben beschriebenen Reinigungsschritte ein Prüfen des Reinigung-Prüfsignals. Bei einem mehrfachen Wiederholen erfolgt eine festgelegte Anzahl von Durchgängen der oben beschriebenen Reinigungsschritte, insbesondere fünf oder zehn Durchgänge, bevor das Reinigung-Prüfsignal geprüft wird. Das Prüfen, ob eine Reinigung der Sensoroberfläche erfolgt ist, kann insbesondere anhand einer Bewertung der Signalqualität des Sensorsignals, insbesondere anhand eines Vergleichs mit einem Referenzsignal, beispielsweise eines Referenz-Kamerabildes, erfolgen.

In einer Weiterbildung des Verfahrens sind die Schritte vorgesehen:
- Schalten des Bypassventils in eine Öffnungsstellung zum Erzeugen einer Bypass-Druckluftströmung,
- Schalten des Bypassventils in eine Schließstellung, insbesondere Schalten des als 3/2-Wegeventil ausgebildeten Bypassventils in eine Schließstellung zum Erzeugen eines Bypass-Druckluft-Reinigungsimpulses.

Beim Schalten des Bypassventils in eine Schließstellung erfolgt bei Weiterbildungen mit einem Schnellentlüftungsventil eine impulsartige Entlüftung in Richtung der Druckluft-Düsenleitung zur Bereitstellung des Bypass-Druckluft-Reinigungsimpulses, wobei das Schnellentlüftungsventil, insbesondere ein Druckluftpuffer des Schnellentlüftungsventils, vorher in der Öffnungsstellung des Bypassventils, insbesondere des 3/2-Wegeventils, durch die Bypass-Druckluftströmung mit Druckluft geladen wurde.

Ein Verfahren zum Betreiben der Reinigungsvorrichtung kann insbesondere durch eine Modulsteuereinheit der Reinigungsvorrichtung oder durch eine Fahrzeugsteuereinheit des Fahrzeugs, oder durch eine Kombination von beiden, gesteuert werden.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: eine gegenüber der unter dem Aktenzeichen 10 2019 111 468.3 angemeldeten, noch nicht veröffentlichten Deutschen Patentanmeldung --die nur in Bezug auf Neuheit betreffend den vorliegenden Anmeldungsgegenstand relevant ist-- bevorzugte Reinigungsvorrichtung mit einem Schaltventil,
- Fig. 2: eine Reinigungsvorrichtung gemäß einer bevorzugten ersten Ausführungsform nach dem Konzept der Erfindung,
- Fig. 3: eine bevorzugte weitere Ausführungsform einer Reinigungsvorrichtung gemäß dem Konzept der Erfindung,
- Fig. 4: eine bevorzugte weitere Ausführungsform einer Reinigungsvorrichtung gemäß dem Konzept der Erfindung,
- Fig. 5: eine weitere bevorzugte Ausführungsform einer Reinigungsvorrichtung gemäß dem Konzept der Erfindung,
- Fig. 6A, 6B: ein als 2/2-Wegeventil ausgebildetes bevorzugtes Bypassventil in einer Schnittansicht,
- Fig. 7A, 7B: ein bevorzugtes Bypassventil in Form eines 3/2-Wegeventils,
- Fig. 8A, 8B: ein bevorzugtes Rückschlagventil,
- Fig. 9: eine bevorzugte Ausführungsform einer Reinigungsvorrichtung in Form eines Sensorreinigungsmoduls,
- Fig. 10: eine weitere bevorzugte Ausführungsform einer Reinigungsvorrichtung in einem Sensorreinigungsmodul,
- Fig. 11: eine noch weitere bevorzugte Ausführungsform einer Reinigungsvorrichtung in einem Sensorreinigungsmodul,
- Fig. 12: ein Fahrzeug mit einer Reinigungsvorrichtung gemäß dem Konzept der Erfindung.

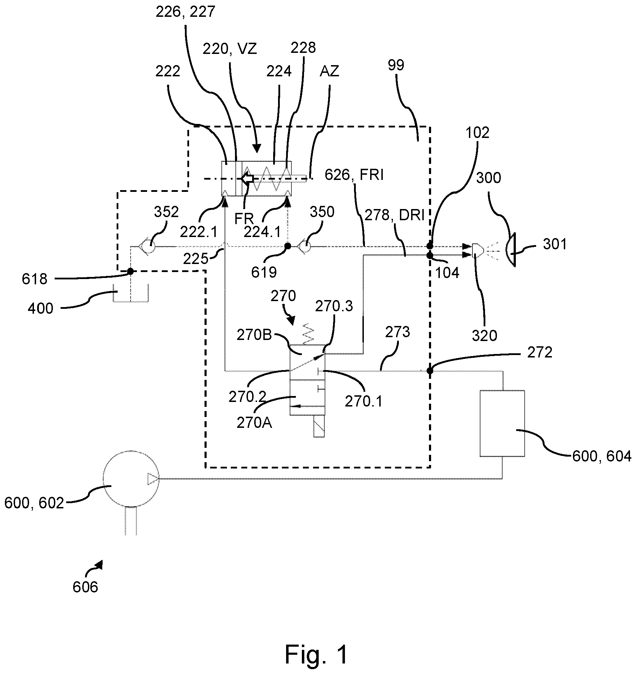

Fig. 1 zeigt eine Reinigungsvorrichtung 99, die ausgebildet ist zum Bereitstellen von Druckluft DL in Form eines Druckluft-Reinigungsimpulses DRI an einem Düsen-Druckluftanschluss 104 und zum Bereitstellen von Reinigungsflüssigkeit F in Form eines Flüssigkeits-Reinigungsimpulses FRI an einem Düsen-

Flüssigkeitsanschluss 102. Die Reinigungsvorrichtung 99 weist einen Moduldruckluftanschluss 272 auf, der ausgebildet ist zum Annehmen von Druckluft DL von einer Druckluftquelle 600, insbesondere einem Kompressor 602 und/oder einem Druckspeicher 604 einer Druckluftversorgungsanlage 606. Der Moduldruckluftanschluss 272 ist über eine Druckluft-Anschlussleitung 273 pneumatisch mit einem ersten Anschluss 270.1 eines Schaltventils 270 verbunden. Das Schaltventil 270 ist vorliegend als 3/2-Wege-Magnetventil ausgebildet.

Die Reinigungsvorrichtung 99 weist einen Modulflüssigkeitsanschluss 618 auf, der ausgebildet ist zum Annehmen von Reinigungsflüssigkeit F von einer Flüssigkeitsquelle 400.

Die Reinigungsvorrichtung 99 weist weiter einen Druckzylinder 220 mit einem als Zylinderstempel 227 ausgebildeten Trennmittel 226 auf, welcher axial entlang einer Zylinderachse AZ bewegbar ist und ein Zylindervolumen VZ des Druckzylinders 220 variabel in eine Luftkammer 222 und eine Flüssigkeitskammer 224 aufteilt. Die in dem abgebildeten Druckzylinder gezeigte Kolbenstange ist optional; in bevorzugten Ausführungsformen kann der Druckzylinder 220 ohne Kolbenstange ausgeführt sein, sodass der Zylinderstempel lediglich von einer Innenwand des Druckzylinders entlang der Zylinderachse AZ bewegbar geführt wird. Der Druckzylinder 220 weist im Bereich der Luftkammer 222 einen Luftkammer-Anschluss 222.1 auf, über den die Luftkammer 222 mit Druckluft DL beaufschlagbar ist, um die Luftkammer 222 zu füllen. Bei einem Beaufschlagen des Luftkammer-Anschlusses 222.1 erfolgt ein Expandieren der Luftkammer 222 unter Verschieben des Trennmittels 226 gegen eine Rückstellkraft FR, wobei sich gleichzeitig die Flüssigkeitskammer 224 verkleinert. Vorliegend wird das Trennmittel 226 in Form des Zylinderstempels 227 von einer Rückstellfeder 228 im Druckzylinder 220 gehalten, wodurch die Rückstellfeder 228 bei Auslenkung des Zylinderstempels 227 die Rückstellkraft FR erzeugt. Der Luftkammer-Anschluss 222.1 ist pneumatisch über eine Luftkammer-Leitung 225 mit einem zweiten Anschluss 270.2 des Schaltventils 270 verbunden.

Der Druckzylinder 220 weist im Bereich der Flüssigkeitskammer 224 einen Flüssigkeitskammer-Anschluss 224.1 auf, über den die Flüssigkeitskammer 224 fluidführend mit der Flüssigkeits-Düsenleitung 626 verbunden ist. Der Flüssigkeitskammer-Anschluss 224.1 ist an einem Zylinder-Anschlusspunkt 619 mit der Flüssigkeits-Düsenleitung 626 fluidführend verbunden. Bei einem Beaufschlagen des Luftkammer-Anschlusses 222.1 mit Druckluft DL und einem Verschieben des Trennmittels 226 gegen die Rückstellkraft FR wird eine Menge von in der Flüssigkeitskammer 224 gehaltenen Reinigungsflüssigkeit F über den Flüssigkeitskammer-Anschluss 224.1 in Form eines Flüssigkeits-Reinigungsimpulses FRI über den Zylinder-Anschlusspunkt 619 und die Flüssigkeits-Düsenleitung 626 an dem Düsen-Flüssigkeitsanschluss 102 für eine Reinigungsdüse 320 bereitgestellt. Dies geschieht dadurch, dass das Volumen der Flüssigkeitskammer 224 durch das Verschieben des Trennmittels 226 verkleinert wird und die Reinigungsflüssigkeit F so aus dem Druckzylinder 220, insbesondere impulsartig, herausgedrückt wird.

Der Düsen-Druckluftanschluss 104 ist über die Druckluft-Düsenleitung 278 pneumatisch mit einem dritten Anschluss 270.3 des Schaltventils 270 verbunden. Das Schaltventil 270 weist insbesondere eine relativ große Nennweite auf, um den Reinigungs-Druckluftimpuls vorteilhaft ohne bzw. mit möglichst nur geringem Druckverlust an die Druckluft-Düsenleitung 278 weiterzugeben. Insbesondere weist das Schaltventil 270 eine Nennweite auf, die größer als der oder gleich dem Durchmesser der Druckluft-Düsenleitung 278 und/oder der Luftkammer-Leitung 225. Es hat sich vorliegend --aber auch allgemein unabhängig von der konkreten Ausführungsform-- gezeigt, dass bevorzugt die insofern vergleichsweise große Nennweite eines Schaltventils 270 in einem Bereich oberhalb von 1,2 mm liegt, insbesondere in einem Bereich von 1,0 mm bis 3,0 mm liegt; allgemein haben sich Nennweiten eines solchen oder ähnlich ausgeführten Schaltventils, wie das des Schaltventils 270, als vorteilhaft erwiesen, um einen Luftimpuls aus dem Ventilkolben des Schaltventils 270 -z.B. auch aus dem Ventilkolben eines Kombinationsventils 335, welches die Funktion des Schaltventils 270 und des Bypassventils 330 kombiniert, oder aus dem Ventilkolben 331 des Bypassventils 330-- möglichst gut weiterzugeben. Insbesondere haben sich solche Nennweiten für die Reinigung eines Kamerasensors als vorteilhaft erwiesen, sind aber nicht darauf beschränkt.

Zwischen dem Zylinder-Anschlusspunkt 619 und dem Düsen-Flüssigkeitsanschluss 102 ist in der Flüssigkeits-Düsenleitung 626 ein Ansaugdruck-Rückschlagventil 350 angeordnet.

Zwischen dem Zylinder-Anschlusspunkt 619 und dem ModulFlüssigkeitsanschluss 618 ist in der Flüssigkeits-Düsenleitung 626 ein Flüssigkeitsimpuls-Rückschlagventil 352 angeordnet. Das Flüssigkeitsimpuls-Rückschlagventil 352 verhindert, das beim Bereitstellen des Flüssigkeits-Reinigungsimpulses FRI Reinigungsflüssigkeit F in Richtung des Modul-Flüssigkeitsanschlusses 618 entweicht.

In einer Belüftungsstellung 270A des Schaltventils 270 ist der erste Anschluss 270.1 mit dem zweiten Anschluss 270.2 pneumatisch verbunden und der dritte Anschluss 270.3 gesperrt. In dieser Belüftungsstellung 270A wird somit ein am Moduldruckluftanschluss 272 anliegender Luftdruck an den Luftkammer-Anschluss 222.1 weitergeleitet, was eine Expansion der Luftkammer 222 und ein Bereitstellen eines Flüssigkeits-Reinigungsimpulses FRI am Düsen-Flüssigkeitsanschluss 102 zur Folge hat. Folglich erfolgt ein Beaufschlagen einer Sensoroberfläche 300 mit dem Flüssigkeits-Reinigungsimpuls FRI über die Reinigungsdüse 320.

In einer Entlüftungsstellung 270B des Schaltventils 270 ist - wie vorliegend dargestellt - der zweite Anschluss 270.2 mit dem dritten Anschluss 270.3 pneumatisch verbunden und der erste Anschluss 270.1 gesperrt. Diese Entlüftungsstellung 270B hat eine Entlüftung des Luftkammer-Anschlusses 222.1 zur Folge, wodurch sich das Trennmittel 226 durch die Rückstellkraft FR zurückbewegt, und sowohl die Luftkammer 222 sich verkleinert, als auch die Flüssigkeitskammer 224 sich vergrößert. Durch das Zurückbewegen des Trennmittels 226 entsteht ein Unterdruck am Flüssigkeitskammer-Anschluss 224.1. Aufgrund des Ansaugdruck-Rückschlagventils 350 wirkt der Unterdruck nur am ModulFlüssigkeitsanschluss 618 (und nicht am Düsen-Flüssigkeitsanschluss 102), wodurch neue Reinigungsflüssigkeit F von der Flüssigkeitsquelle 400 in die Flüssigkeitskammer 224 gesaugt wird, insbesondere ohne dass eine Pumpe oder dergleichen Fördereinrichtung benötigt wird.

Gleichzeitig bewirkt das Zurückbewegen des Trennmittels 226 einen Überdruck am Luftkammer-Anschluss 222.1, welcher ein Strömen von Druckluft DL über den zweiten Anschluss 270.2 und den dritten Anschluss 270.3 zum Düsen-Druckluftanschluss 104 zur Folge hat, wodurch ein Druckluft-Reinigungsimpuls DRI am Düsen-Druckluftanschluss 104 bereitgestellt wird. Folglich wird über die Reinigungsdüse 320 die Sensoroberfläche 300 zwecks Reinigung mit dem Druckluft-Reinigungsimpuls DRI beaufschlagt.

Der Reinigungsvorgang ist damit abgeschlossen und kann bei Bedarf durch ein Zurückschalten des Schaltventils 270 in die Belüftungsstellung 270A wiederholt werden.

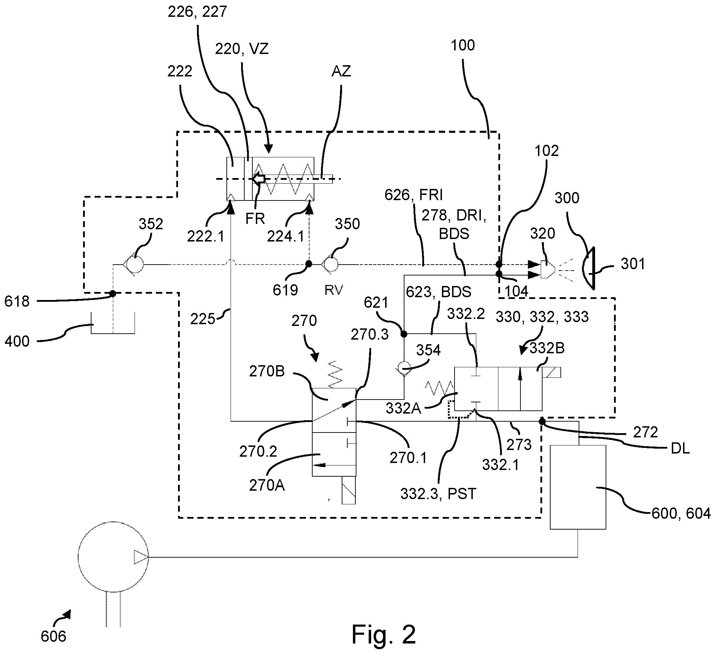

Fig. 2 zeigt eine Reinigungsvorrichtung 100 gemäß dem Konzept der Erfindung, welche im Unterschied zu der in Fig. 1 gezeigten Reinigungsvorrichtung 99 zusätzlich ein Bypassventil 330 und ein Druckluftimpuls-Rückschlagventil 354 aufweist. Das Bypassventil 330 ist vorliegend in Form eines 2/2-Wegeventils 332, nämlich eines 2/2-Wege-Magnetventils 333 gebildet. Das 2/2-Wegeventil 332 ist pneumatisch über einen ersten Anschluss 332.1 mit der Druckluft-Anschlussleitung 273, und über einen zweiten Anschluss 332.2 und einer Bypassleitung 623 mit einem Bypass-Anschlusspunkt 621 der Druckluft-Düsenleitung 278 pneumatisch verbunden.

Das Druckluftimpuls-Rückschlagventil 354 ist zwischen dem dritten Anschluss 270.3 des Schaltventils 270 und dem Bypass-Anschlusspunkt 621 in der Druckluft-Düsenleitung 278 angeordnet.

In einer Schließstellung 232A das 2/2-Wegeventils 332 bzw. des Bypassventils 330 ist der erster Anschluss 232.1 von dem zweiten Anschluss 232.2 pneumatischen getrennt. In dieser Schließstellung 232A ist die Funktionsweise der Reinigungsvorrichtung 100 im Wesentlichen wie die der in Fig. 1 beschriebenen Reinigungsvorrichtung 99. Durch ein Schalten des Bypassventils 330 kann jedoch gemäß dem Konzept der Erfindung unter Umgehung des Schaltventils 270 der Düsen-Druckluftanschluss 104 direkt mit Druckluft DL vom Moduldruckluftanschluss 272 versorgt werden. Vorliegend geschieht dies, indem das Bypassventil 330 in Form des 2/2-Wegeventils 332 in eine Öffnungsstellung 332B geschaltet wird, in der der erste Anschluss 332.1 mit dem zweiten Anschluss 332.2 pneumatisch verbunden wird. Hierdurch kann die am Moduldruckluftanschluss 272 anliegende Druckluft DL direkt über den Bypass-Anschlusspunkt 621 und die Druckluft-Düsenleitung 278 weitergeleitet werden zum Bereitstellen einer Bypass-Druckluftströmung BDS am Düsen-Druckluftanschluss 104. Durch das Bypassventil 330 wird somit vorteilhaft ein Beaufschlagen der Sensoroberfläche 300 mit Druckluft DL, insbesondere mit einer Bypass-Druckluftströmung BDS, ermöglicht, ohne den Druckzylinder 220 zu betätigen.

Das Druckluftimpuls-Rückschlagventil 354 stellt sicher, dass - wenn sich das 2/2-Wegeventil 332 in der Öffnungsstellung 332B und das Schaltventil in der Entlüftungsstellung 270B befindet - die Druckluft DL nicht in Richtung des Schaltventils 270 und somit in die Luftkammer 222 des Druckzylinders 220 strömen kann.

Optional kann das 2/2-Wegeventil 332 am ersten Anschluss 332.1 eine Steuerleitung 332.3 zum Bereitstellen eines Steuerdrucks PST aufweisen.

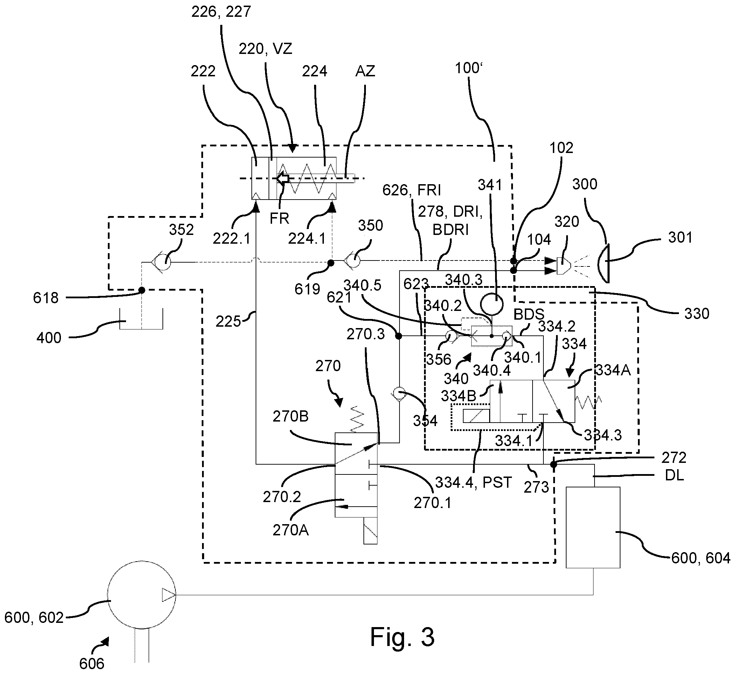

Fig. 3 zeigt eine weitere bevorzugte Ausführungsform einer Reinigungsvorrichtung 100' gemäß dem Konzept der Erfindung, welche im Unterschied zu der in Fig. 2 gezeigten Reinigungsvorrichtung 100 als Bypassventil 330 ein eine Anordnung aus einem 3/2-Wegeventil 334 und zusätzlich einem Schnellentlüftungsventil 340 aufweist. Das Schnellentlüftungsventil 340 ist in der Bypassleitung 623 angeordnet. Mittels des Schnellentlüftungsventils 340 kann vorteilhaft auf Basis der, insbesondere als kontinuierliche Strömung ausgebildeten, Bypass-Druckluftströmung BDS ein impulsartiger Bypass-Druckluft-Reinigungsimpuls BDRI generiert und am Düsen-Druckluftanschluss 104 bereitgestellt werden.

Das Schnellentlüftungsventil 340 weist einen ersten Anschluss 340.1 auf, welcher das Schnellentlüftungsventil 340 mit dem einem zweiten Anschluss 334.2 des 3/2-Wegeventils 334 pneumatisch verbindet. Das Schnellentlüftungsventil 340 weist einen zweiten Anschluss 340.2 auf, welcher das Schnellentlüftungsventil 340 mit dem Bypass-Anschlusspunkt 621 pneumatisch verbindet. Das Schnellentlüftungsventil 340 weist weiter einen dritten Anschluss 340.3 auf, an den ein Druckluftpuffer 341 des Schnellentlüftungsventils 340 pneumatisch angeschlossen ist. Das Schnellentlüftungsventil 340 ist in der Weise eines Auswahlventils gebildet mit einem Ventilkörper 340.4, welcher von dem ersten Anschluss 340.1 und dem zweiten Anschluss 340.2 denjenigen sperrt, an dem der schwächere Luftdruck anliegt und den jeweils anderen Anschluss pneumatisch mit dem dritten Anschluss 340.3 verbindet.

Weiter ist in der Bypassleitung 623 zwischen dem zweiten Anschluss 334.2 des 3/2-Wegeventils 334 und dem Bypass-Anschlusspunkt 621 ein Bypass-Rückschlagventil 356 angeordnet, welches in einer Strömungsrichtung vom 3/2-Wegeventil 334 zum Bypass-Anschlusspunkt 621 öffnet und in Gegenrichtung sperrt. In einer Öffnungsstellung 334B des 3/2-Wegeventils 334 wird - analog zur Öffnungsstellung 332B des in Fig. 2 gezeigten 2/2-Wegeventils 332 - ein erster, zur Druckluft-Anschlussleitung 273 führender Anschluss 334.1 des 3/2-Wegeventils 334 mit dem zweiten Anschluss 334.2 pneumatisch verbunden. Dies hat zur Folge, dass am Moduldruckluftanschluss 272 anliegende Druckluft DL in Form der Bypass-Druckluftströmung BDS an den ersten Anschluss 340.1 des Schnellentlüftungsventils 340 weitergeleitet wird, wodurch der Ventilkörper 340.4 sperrend gegen den zweiten Anschluss 340.2 gedrückt wird und über den dritten Anschluss 340.3 der Druckluftpuffer 341 mit Druckluft DL gefüllt wird. Wenn nun das 3/2-Wegeventil 334 in eine Schließstellung 334A geschaltet wird, wird der zweite Anschluss 334.2 pneumatisch mit einem, insbesondere in die Umgebung entlüftenden, dritten Anschluss 334.3 verbunden und der erste Anschluss 334.1 gesperrt. Als Folge dessen fällt der Luftdruck am ersten Anschluss 340.1 des Schnellentlüftungsventils auf einen Umgebungsdruck ab und der Ventilkörper 340.4 wird, insbesondere durch eine Schnellentlüftungsventil-Steuerleitung 340.5, durch den Druck der im Druckluftpuffer 341 gespeicherten Druckluft DL sperrend gegen den ersten Anschluss 340.1 gedrückt. Folglich ist der zweite Anschluss 340.2 geöffnet, wodurch die im Druckluftpuffer 341 gespeicherte Druckluft DL in Form des Bypass-Druckluft-Reinigungsimpulses BDRI über den zweiten Anschluss 340.2 und weiter den Bypass-Anschlusspunkt 621 und die Druckluft-Düsenleitung 278 am Düsen-Druckluftanschluss 104 bereitgestellt werden kann. Das Druckluftimpuls-Rückschlagventil 354 verhindert dabei ein Strömen des Bypass-Druckluft-Reinigungsimpulses BDRI in Richtung des Schaltventils 270.

Durch ein Zurückschalten des 3/2-Wegeventils 334 in die Öffnungsstellung 334B kann der Druckluftpuffer 341 wieder mit Druckluft DL gefüllt und der Vorgang zur Erzeugung des Bypass-Druckluft-Reinigungsimpulses BDRI - bei Bedarf und insbesondere beliebig oft und unabhängig vom Druckzylinder 220 - wiederholt werden.

Unabhängig von der Erzeugung einer Bypass-Druckluftströmung BDS und/oder eines Bypass-Druckluft-Reinigungsimpulses BDRI kann mittels des Druckzylinders 220 und des Schaltventils 270 - wie in Zusammenhang mit Fig. 1 beschrieben - im bekannter Weise das Erzeugen eines Druckluft-Reinigungsimpulses DRI und/oder eines Flüssigkeits-Reinigungsimpulses FDRI erfolgen.

Bei dem in Fig. 3 gezeigten Reinigungssystem 100' verhindert das Bypass-Rückschlagventil 356, dass ein durch den Druckzylinder 220 erzeugter Druckluft-Reinigungsimpuls DRI, der über das Schaltventil 270 in seiner Entlüftungsstellung 270B auf die Druckluft-Düsenleitung 278 geleitet wird, zum Schnellentlüftungsventil 340 gelangen kann.

Optional kann das 3/2-Wegeventil 334 am ersten Anschluss 334.1 eine Steuerleitung 334.4 zum Bereitstellen eines Steuerdrucks PST aufweisen.

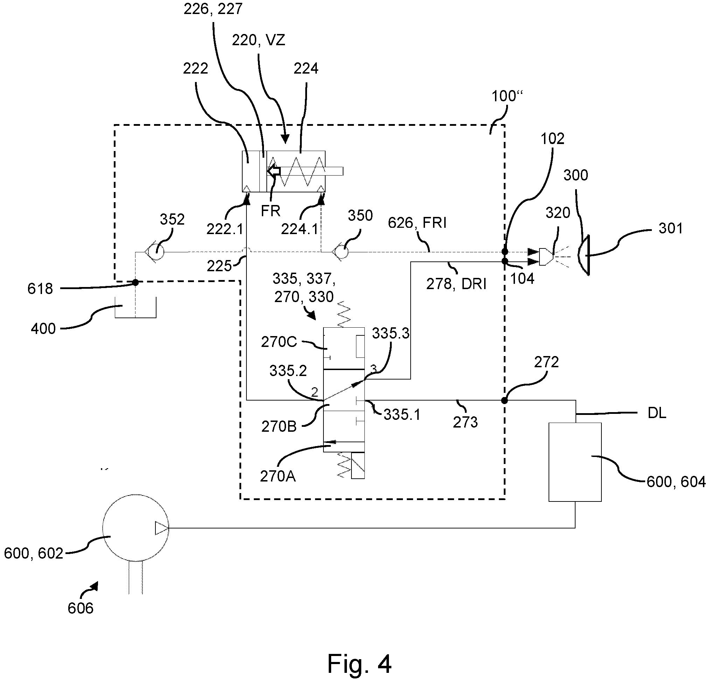

Fig. 4 zeigt eine weitere Ausführungsform einer Reinigungsvorrichtung 100" gemäß dem Konzept der Erfindung. Die Reinigungsvorrichtung 100" weist ein Kombinationsventil 335 in Form eines 3/3-Wegeventils 337 auf, welches die Funktion des Schaltventils 270 und des Bypassventils 330 kombiniert. Ein erster Anschluss 335.1 des Kombinationsventils 335 entspricht dabei dem ersten Anschluss 270.1 des Schaltventils 270, ein zweiter Anschluss 335.2 des Kombinationsventils 335 dem zweiten Anschluss 270.2 des Schaltventils 270 und ein dritter Anschluss 335.3 des Kombinationsventils 335 dem dritten Anschluss 270.3 des Schaltventils 270, wobei das Schaltventils 270 in Fig. 1 bis Fig. 3 gezeigt ist.

Das Kombinationsventil 335 unterscheidet sich dadurch von dem in den Figuren 1-3 gezeigten Schaltventil 270, dass es - zusätzlich zu der in Fig. 1 bis Fig. 3 gezeigten Belüftungsstellung 270A und Entlüftungsstellung 270B - eine Bypassstellung 270C aufweist. Die Bypassstellung 270C sperrt den zum Luftkammeranschluss 222.1 führenden zweiten Anschluss 335.2, und stellt gleichzeitig eine pneumatische Verbindung zwischen dem ersten Anschluss 335.1 und dem dritten Anschluss 296 des Kombinationsventils 335 her, wodurch der Moduldruckluftanschluss 272 pneumatisch mit dem Düsen-Druckluftanschluss 104 zum Bereitstellen der Bypass-Druckluftströmung BDS verbunden wird. Die Bypassstellung 270C übernimmt somit im Wesentlichen die Funktion des Bypassventils 330.

Mit der hier gezeigten Ausführungsform der Reinigungsvorrichtung 100" kann durch die Kombination des Schaltventils 270 und des Bypassventils 130 in einem Kombinationsventil 335 vorteilhaft ein kompakter Aufbau erreicht werden.

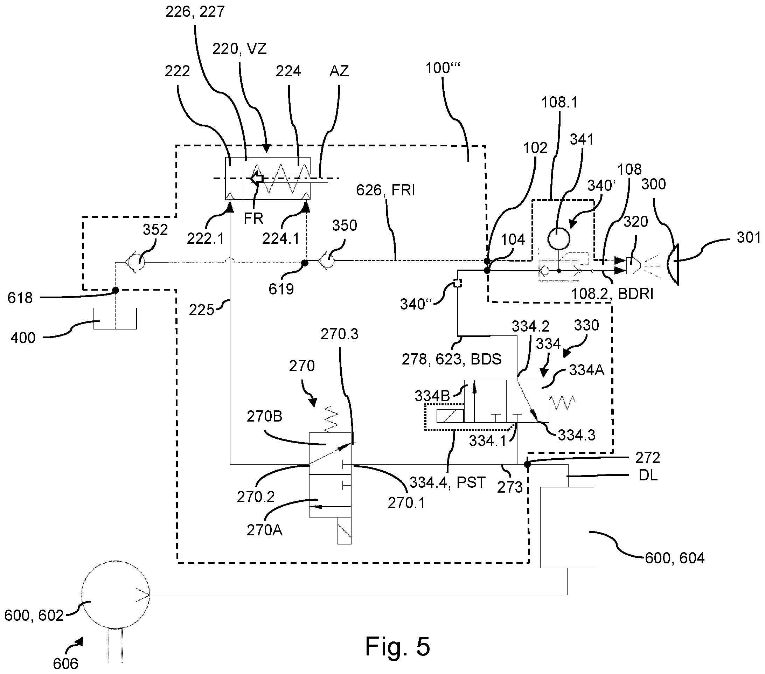

Generell ist es hinsichtlich möglichst geringer Druckverluste und dadurch eines möglichst starken Bypass-Druckluft-Reinigungsimpulses BDRI vorteilhaft, die Leitungslänge zwischen dem Schnellentlüftungsventils 340 und der Reinigungsdüse möglichst kurz zu halten. In Fig. 5 ist eine weitere bevorzugte Ausführungsform einer Reinigungsvorrichtung 100‴ dargestellt, bei der - insbesondere in Bezug auf die in Fig. 3 dargestellte Ausführungsform -statt des in Fig. 3 gezeigten Schnellentlüftungsventils 340 ein weiteres Schnellentlüftungsventil 340' näher an der Reinigungsdüse 320 angeordnet ist, nämlich zwischen dem Druckluft-Düsenanschluss 104 und der Reinigungsdüse 320 in einer Druckluft-Düsenanschlussleitung 108.2. Die Druckluft-Düsenanschlussleitung 108.2 bildet dabei zusammen mit einer den Flüssigkeits-Düsenanschluss 102 mit der Reinigungsdüse 320 verbindenden Flüssigkeits-Düsenanschlussleitung 108.1 eine Düsenanschlussleitung 108. Die Reinigungsdüse 320, die Düsenanschlussleitung 108 und das Schnellentlüftungsventil 340 können dabei insbesondere als Teil der Reinigungsvorrichtung 100‴ gebildet sein.

In der gezeigten Ausführungsform ist weiterhin der dritte Anschluss 270.3 des Schaltventils 270 nicht mit der Druckluft-Düsenleitung 278 verbunden, sondern ist ausgebildet, in der Entlüftungsstellung 270B direkt in die Umgebung zu entlüften. Es wird somit in dieser Weiterbildung kein durch den Druckzylinder 220 erzeugter Druckluft-Reinigungsimpuls DRI an der Druckluft-Düsenleitung 278 bereitgestellt, jedoch wird vorteilhaft eine konstruktive Vereinfachung der Reinigungsvorrichtung 100‴ erreicht, insbesondere durch den Wegfall der Rückschlagventile 354, 356. Die Bypassleitung 623 und die Druckluft-Düsenleitung 278 fallen in dieser Ausführungsform direkt zusammen und sind ausgebildet zum Führen des Bypass-Druckluftstroms BDS vom Bypassventil 330 zum Druckluft-Düsenanschluss 104.

In anderen Ausführungsformen kann alternativ ein Schnellentlüftungsventils 340 auch in anderen Stellen in der Druckluft-Düsenleitung 278 oder der Druckluft-Düsenanschlussleitung 108.2 angeordnet werden, insbesondere wie hier als - alternativ zu dem weiteren Schnellentlüftungsventil 340' vorzusehendes und stark vereinfacht dargestelltes - noch weiteres Schnellentlüftungsventil 340", in der Druckluft-Düsenleitung 278 in der Nähe des Druckluft-Düsenanschlusses 104.

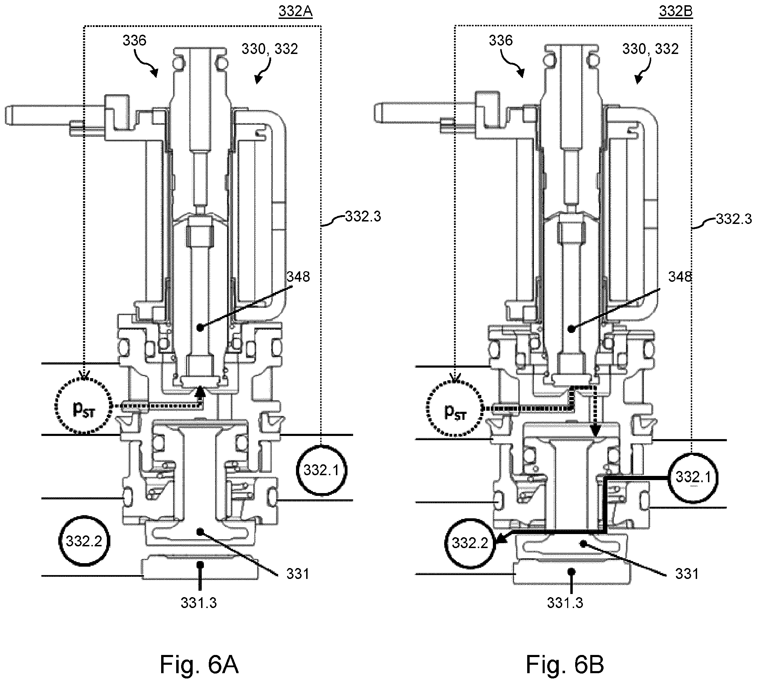

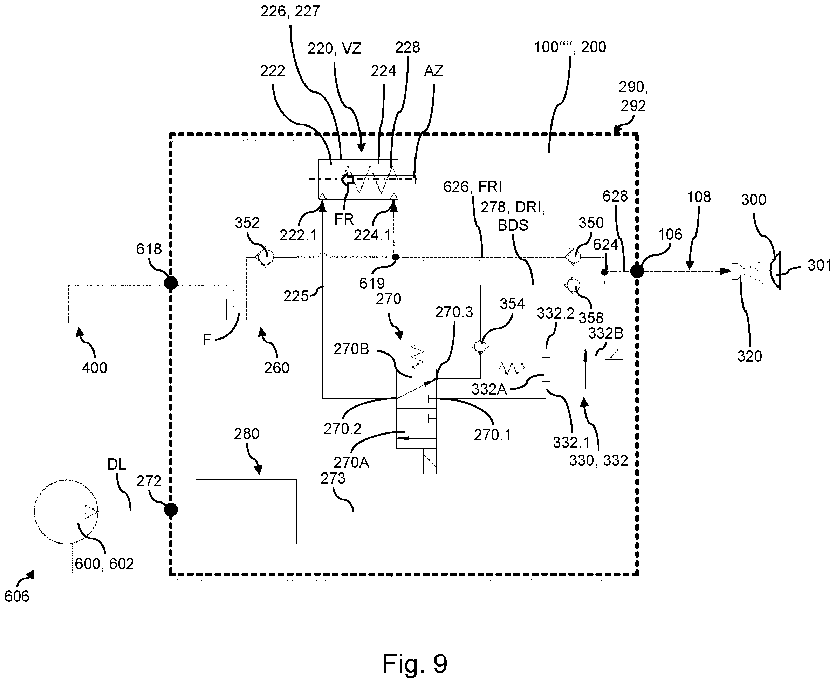

Fig. 6A und Fig. 6B zeigen ein als 2/2-Wegeventil 332 ausgebildetes bevorzugtes Bypassventils 330 in einer Schnittansicht. Bei der hier gezeigten Ausführungsform handelt es sich um ein als Magnetventil ausgebildetes Patronenventil 336, welches über eine entsprechende elektronische Ansteuerung - und hier optional zusätzlich über einen Steuerdruck PST - geschaltet werden kann. Das Patronenventil 336 ist insbesondere für den Einbau in ein Ventilpatronengehäuse 292 ausgebildet, welches als Modulgehäuse 290 für ein Sensorreinigungsmodul 200 eingesetzt werden kann (siehe Fig. 9, Fig. 10, Fig. 11).

Der Steuerdruck PST kann dabei über eine hier schematisch dargestellte Steuerdruckleitung 332.3 bereitgestellt werden, wobei die Steuerdruckleitung 332.3 insbesondere mit dem ersten Anschluss 332.1 des 2/2-Wegeventils 332 pneumatisch verbunden ist. In einer in Fig. 6A dargestellten Schließstellung 332A ist der erste Anschluss 332.1 und der zweite Anschluss 332.2 des 2/2-Wegeventils 332 durch einen Ventilkolben 331 pneumatisch getrennt.

In einer in Fig. 6B gezeigten Öffnungsstellung 332B wird - durch Bestromung eines Magnetankers 348 und einer daraus resultierenden Axialbewegung des Magnetankers 348 der Ventilkolben 331 mit dem Steuerdruck PST beaufschlagt, was eine Axialbewegung des Ventilkolbens 331 in Richtung eines Ventilsitzes 296 des 2/2-Wegeventils 332 zur Folge hat. Als Folge der Axialbewegung des Ventilkolbens 331 wird der erste Anschluss 332.1 mit dem zweiten Anschluss 332.2 pneumatisch verbunden. Bei einem als Ventilpatronengehäuse 292 ausgebildeten Modulgehäuse 290 kann der Ventilsitz 296 insbesondere als Teil des Ventilpatronengehäuse 292, insbesondere als Teil eines Ventileinsatzes für das Ventilpatronengehäuse 292, gebildet sein.

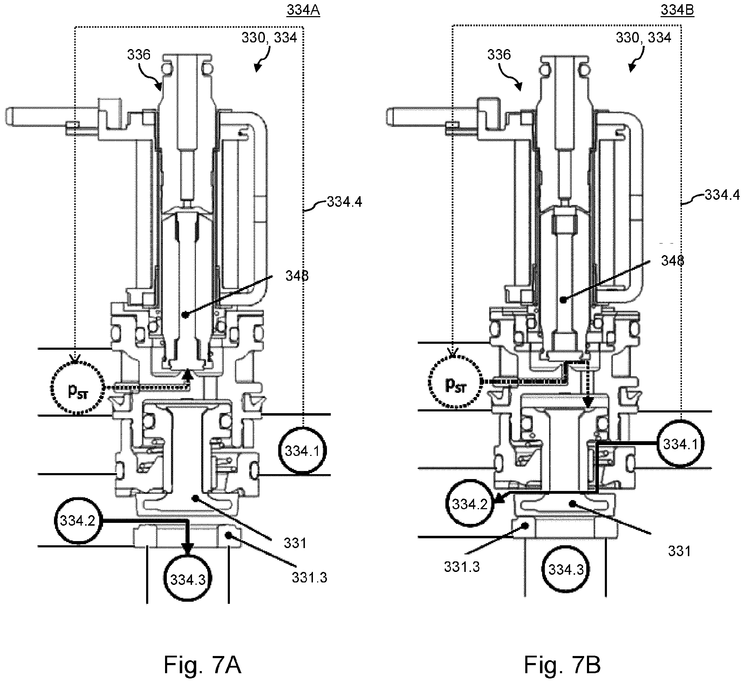

In Fig. 7A und Fig. 7B ist ein weiteres bevorzugtes Bypassventil 330 in Form eines 3/2-Wegeventils 334 dargestellt. Insbesondere ist das 3/2-Wegeventil 334 wie das in Fig. 6A und Fig. 6B gezeigte 2/2-Wegeventil 332 als, insbesondere identisches, Patronenventil 336 ausgebildet und kann vorliegend - durch die zusätzliche Nutzung eines im Ventilsitz 296 angeordneten Anschlusses als dritten Anschluss 334.3 - als 3/2-Wegeventil 334 genutzt werden.

In der in Fig. 7A gezeigten Schließstellung 334A des 3/2-Wegeventils 334 ist der Magnetanker 348 in seiner geschlossenen Stellung, wodurch der Steuerdruck PST nicht auf den Ventilkolben 331 wirken kann. In dieser Schließstellung 334 A ist der erste Anschluss 334.1 gesperrt und der zweite Anschluss 334.2 mit dem dritten Anschluss 334.3 pneumatisch verbunden.

Analog zu der in Fig. 6B gezeigten Öffnungsstellung 332B des 2/2-Wegeventils 332 wird in einer in Fig. 7B gezeigten Öffnungsstellung 334B des 3/2-Wegeventils 334 der Magnetanker 348 durch Bestromung nach oben bewegt, wodurch der Steuerdruck PST auf den Ventilkolben 331 wirken kann und diesen axial in Richtung des Ventilsitzes 296 bewegt. Hierdurch wird der dritte Anschluss 334.3 gesperrt und der erste Anschluss 334.1 pneumatisch mit dem zweiten Anschluss 334.2 des 3/2-Wegeventils 334 verbunden.

In alternativen Ausführungsformen können auch andere dem Fachmann bekannte Ventilarten eingesetzt werden, beispielsweise ein direkt schaltendes Magnetventil ohne Verwendung eines Steuerdrucks. Bei einem direkt schaltenden Magnetventil wird der Ventilkolben direkt durch die Bestromung eines Magnetankers bewegt, wodurch kein Beaufschlagen des Ventilkolbens mit einem Steuerdruck nötig ist.

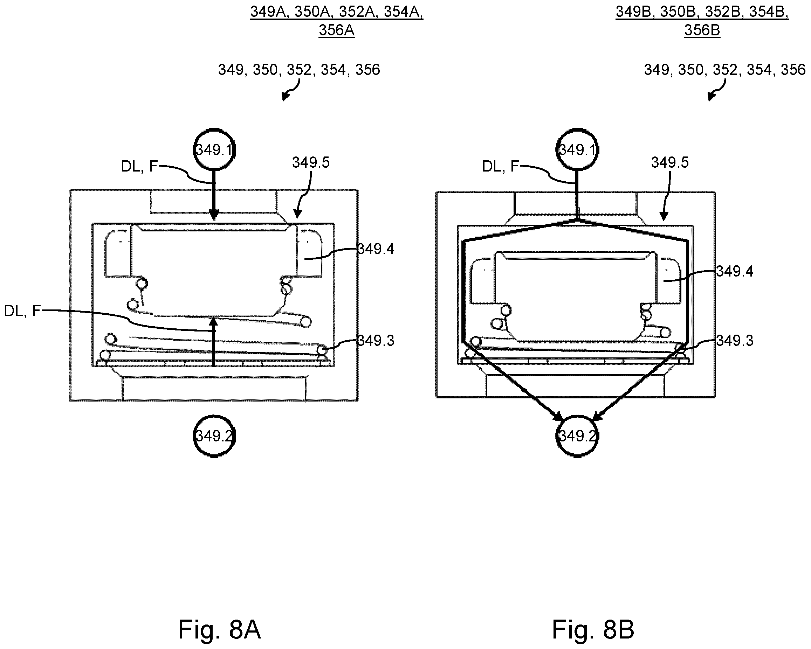

Fig. 8A und Fig. 8B zeigt ein bevorzugtes Rückschlagventil 349, insbesondere ein Ansaugdruck-Rückschlagventils 350, eines Flüssigkeitsimpuls-Rückschlagventils 352, eines Druckluftimpuls-Rückschlagventils 354 und/oder eines Bypass-Rückschlagventils 356. In Fig. 8A ist das Rückschlagventil 349 in einer ersten, sperrenden Stellung 349A dargestellt, in der eine Strömung von Druckluft DL oder Reinigungsflüssigkeit F das Rückschlagventil nicht passieren kann. Dies ist der Fall, wenn die Druckluft DL oder Reinigungsflüssigkeit F an einem zweiten Anschluss 349.2 anliegt, da sie einen Ventilkörper 349.4 gegen einen Ventilsitz 349.5 drückt und somit eine pneumatische und/oder fluidführende Verbindung zwischen dem zweiten Anschluss 349.2 und dem ersten Anschluss 349.1 gesperrt ist.

Das Rückschlagventil sperrt ebenfalls, wenn die Druckluft DL und/oder die Reinigungsflüssigkeit F an dem ersten Anschluss 349.1 mit einem Druck anliegt, der zu gering ist zum Überwinden einer Kraft einer Ventilfeder 349.3, und der Ventilkörper 349.4 somit nicht vom Ventilsitz 349.5 abgehoben werden kann.

In Fig. 8B ist das Rückschlagventil 349 in einer zweiten, geöffneten Stellung 349B dargestellt. In dieser geöffneten Stellung 349B liegt eine Druckluft DL und/oder eine Reinigungsflüssigkeit F am ersten Anschluss 349.1 an, deren Druck ausreichend hoch ist zur Überwindung der Kraft der Ventilfeder 349.3, wodurch der Ventilkörper 349.4 vom Ventilsitz 349.5 abgehoben wird und die Druckluft und/oder die Reinigungsflüssigkeit F zum zweiten Anschluss 349.2 strömen kann.

Fig. 9 zeigt eine Ausführungsform einer Reinigungsvorrichtung 100"", welche in Form eines Sensorreinigungsmoduls 200, insbesondere in einem Modulgehäuse 290 eingehaust, gebildet ist. Das Modulgehäuse 290 kann insbesondere als Ventilpatronengehäuse 292 gebildet sein. Ein Ventilpatronengehäuse 292 bietet den Vorteil eines pneumatischen bzw. hydraulischen Standardbauteils, welches aus anderen Bereichen, beispielsweise Achsmodulatoren, bekannt und verfügbar ist.

Das vorliegende Sensorreinigungsmodul 200 kann optional einen Modulspeicher 260 zum Speichern von Reinigungsflüssigkeit F innerhalb des Sensorreinigungsmoduls 200 aufweisen. Der Modulspeicher 260 ist insbesondere zwischen dem Modulflüssigkeitsanschluss 618 und dem Flüssigkeitsimpuls-Rückschlagventil 352 fluidführend mit der Flüssigkeits-Düsenleitung 626 verbunden. Mittels eines Modulspeichers 260 kann vorteilhaft Reinigungsflüssigkeit F, zusätzlich oder alternativ zu einer Flüssigkeitsquelle 400, dezentral in dem Sensorreinigungsmodul 200 gespeichert werden. In der hier gezeigten Ausbildung und Anordnung des Modulspeicher 260 kann vorteilhaft bei der bereits oben beschriebenen Bewegung des Trennmittels 226, insbesondere des Zylinderstempels 227, im Druckzylinder 220, und dem dabei entstehenden Unterdruck am Flüssigkeitskammer-Anschluss 224.1, die Reinigungsflüssigkeit F aus dem Modulspeicher 260 entnommen werden. Insbesondere werden hierzu vorteilhaft - außer dem gezeigten Druckzylinder 220, dem Flüssigkeitsimpuls-Rückschlagventil 352 und dem Ansaugdruck-Rückschlagventil 350 - keine weiteren hydraulischen bzw. fluidischen Schalt- und/oder Fördermittel benötigt. Je nach Fassungsvermögen des optionalen Modulspeichers 260 kann dieser vorteilhaft die Abhängikeit von einer Flüssigkeitsquelle verringern und/oder als Ausgleichsbehälter dienen, insbesondere um Luft in den Reinigungsflüssigkeit führenden Teilen der Reinigungsvorrichtung zu vermeiden.

Das vorliegende Sensorreinigungsmodul 200 weist weiter einen optionalen Moduldruckluftspeicher 280 auf, welcher ausgebildet ist zum Aufnehmen von am Moduldruckluftanschluss 272 bereitgestellter Druckluft DL. Über einen Moduldruckluftspeicher 280 kann die Verfügbarkeit von Druckluft DL im Sensorreinigungsmodul 200 vorteilhaft erhöht werden. Der Moduldruckluftspeicher 280 ist insbesondere in der Druckluft-Anschlussleitung 273, insbesondere zwischen dem Moduldruckluftanschluss 272 und dem Bypassventil 330, angeordnet.

Weiterhin weist das Sensorreinigungsmodul 200 einen Düsen-Kombinationsanschluss 106 auf zum Anschluss einer Reinigungsdüse 320. Der Düsen-Kombinationsanschluss 106 ist fluidführend mit einer Düsenleitungs-Zusammenführung 624 verbunden. Die Düsenleitungs-Zusammenführung 624 für die Flüssigkeits-Düsenleitung 626 mit der Druckluft-Düsenleitung 278 fluidführend zur Bildung einer Kombinations-Düsenleitung 628 zusammen. Durch einen Düsen-Kombinationsanschluss 106 entsteht somit vorteilhaft ein vereinfachter, lediglich einen Leitungsausschuss aufweisender, Modulanschluss für eine Reinigungsdüse 320. Gleichwohl kann das Sensorreinigungsmodul 200 in alternativen Ausführungsformen, wie in Fig. 2, Fig. 3, Fig. 4 gezeigt, in getrennter Weise einen Düsen-Flüssigkeitsanschluss 102 und einen Düsen-Druckluftanschluss 104 aufweisen.

Optional kann das Sensorreinigungsmodul 200 in der Druckluft-Düsenleitung 278 zusätzlich ein Düsenleitungs-Rückschlagventil 358 aufweisen, welches ausgebildet ist, sich in Richtung des Druckluft-Reinigungsimpulses DRI und der Bypass-Druckluftströmung BDS (und, in Ausführungsformen mit Schnellentlüftungsventil 340, auch in Richtung des Bypass-Druckluft-Reinigung Impulses BDRI) zu öffnen, und in Gegenrichtung zu sperren.

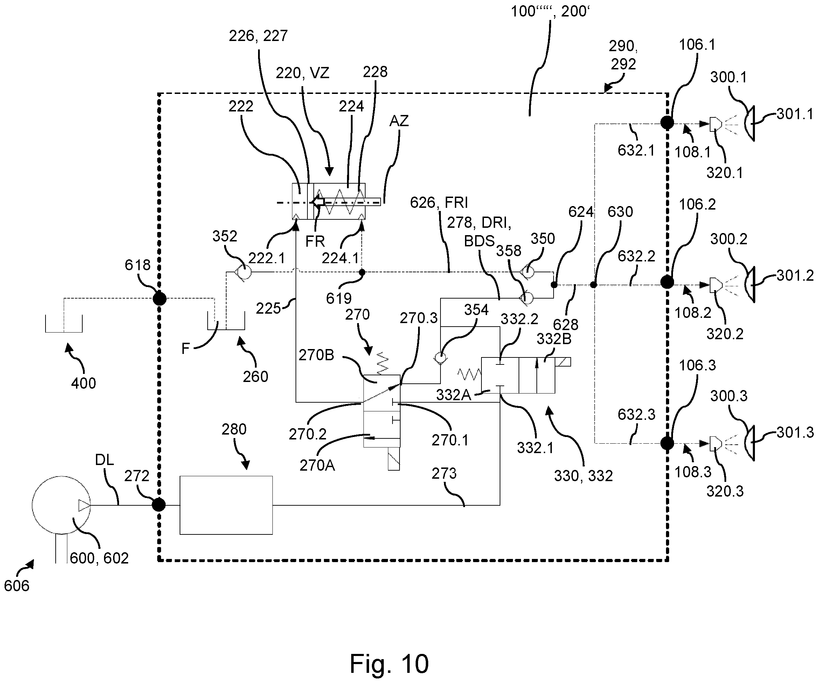

Die in Fig. 10 gezeigte Ausführungsform einer Reinigungsvorrichtung 100‴ʺ in einem Sensorreinigungsmodul 200' unterscheidet sich von der in Fig. 9 gezeigten Ausführungsform des Sensorreinigungsmoduls 200 darin, dass in der Kombinations-Düsenleitung 628 ein Düsenleitungs-Verteilungspunkt 630 angeordnet ist. Der Düsenleitung-Verteilpunkt 630 ist mit einer zu einem ersten Düsen-Kombinationsanschluss 106.1 führenden, ersten Düsen-Zweigleitung 632.1, und mit einer zu einem zweiten Düsen-Kombinationsanschluss 106.2 führenden, zweiten Düsen-Zweigleitung 632.2, und mit einer zu einem dritten Düsen-Kombinationsanschluss 106.3 führenden, dritten Düsen-Zweigleitung 632.3, fluidführend verbunden. Gleichwohl sind auch Ausführungsformen möglich mit einer größeren oder kleineren Anzahl an Düsen-Zweigleitungen 632 und entsprechend an Düsen-Kombinationsanschlüssen 106. In der hier gezeigten Ausführungsform des Sensorreinigungsmoduls 200' können vorteilhaft mehrere Reinigungsdüsen 320 an ein Sensorreinigungsmodul 200' angeschlossen werden, vorliegend eine erste Reinigungsdüse 320.1 zum Reinigen einer ersten Sensoroberfläche 300.1, eine zweite Reinigungsdüse 320.2 zum Reinigen einer zweiten Sensoroberfläche 300.2 und eine dritte Reinigungsdüse 320.3 zum Reinigen einer dritten Sensoroberfläche 300.3.

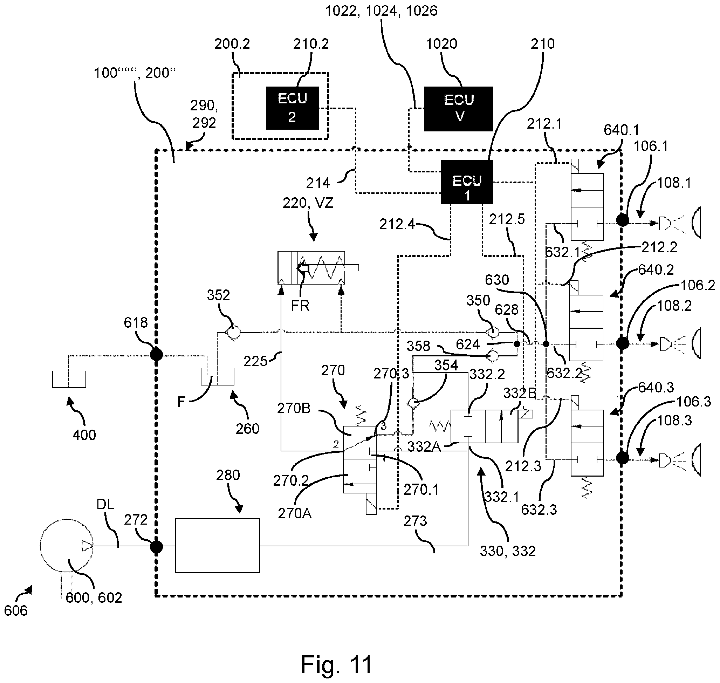

Die in Fig. 11 gezeigte Ausführungsform einer Reinigungsvorrichtung 100‴‴ in einem Sensorreinigungsmodul 200" unterscheidet sich von der in Fig. 10 gezeigten Ausführungsform des Sensorreinigungsmoduls 200' darin, dass in jeder Düsen-Zweigleitung 632.1, 632.2, 632.3 jeweils ein Düsenventil 640.1, 640.2, 640.3 angeordnet ist. Vorliegend sind die Düsenventile als 2/2-Wege-Magnetventile ausgebildet. Mittels eines oder mehrerer Düsenventils 640 ist es vorteilhaft möglich, einzelne Reinigungsdüsen 320 beim Bereitstellen eines Flüssigkeits-Reinigungsimpulses FRI und/oder eines Druckluft-Reinigungsimpulses DRI gezielt zu aktivieren oder deaktivieren.

Weiter ist vorliegend in Fig. 11 beispielhaft eine Modulsteuereinheit 210 zum Ansteuern von Ventilen des Sensorreinigungsmodul 200", insbesondere des Schaltventils 270 und des Bypassventils 330, dargestellt. Die Modulsteuereinheit 210 steht insbesondere mit einer Fahrzeugsteuereinheit 1020 über eine Fahrzeugsteuerleitung 1024, die insbesondere als Fahrzeugbus 1026 ausgebildet ist, zum Austauschen von Steuersignalen 1022 signalführend in Verbindung. Die Modulsteuereinheit 210 ist über eine Schaltventil-Steuerleitung 212.4 signalführend mit dem Schaltventil 270 verbunden. Die Modulsteuereinheit 210 ist über eine Bypassventil-Steuerleitung 212.5 signalführend mit dem Bypassventil 330 verbunden. Die Modulsteuereinheit 210 kann über eine Modulkommunikationsleitung 214 mit weiteren Modulsteuereinheiten 210.2 weiterer Sensorreinigungsmodule 200.2 signalführend verbunden sein.

Jede der hier im Rahmen der Erfindung vorgestellten Ausführungsformen einer Reinigungsvorrichtung 100, 100", 100‴, 100ʺʺ, 100‴ʺ und/oder eines Sensorreinigungsmodul 200, 200', 200" kann eine derartige Modulsteuereinheit 210 aufweisen.

Im vorliegenden Fall der in Fig. 11 gezeigten Ausführungsform ist die Modulsteuereinheit 210 zusätzlich über eine erste Düsenventil-Steuerleitung 212.1 signalführend mit dem ersten Düsenventil 640.1, und über eine zweite Düsenventil-Steuerleitung 212.2 signalführend mit dem zweiten Düsenventil 640.2, und über eine dritte Düsenventil-Steuerleitung 212.3 signalführend mit dem dritten Düsenventil 640.3 verbunden.

In Fig. 9, Fig. 10 und Fig. 11 ist beispielhaft die Integration einer Reinigungsvorrichtung 100 gemäß dem Konzept der Erfindung hier in Anlehnung an die in Fig. 2 gezeigte Ausführungsform mit einem als 2/2-Wegeventil 332, insbesondere als 2/2-Wege-Magnetventil 333, ausgebildeten Bypassventil 330 gezeigt. Gleichwohl ist es möglich, andere, ein Bypassventil 330 aufweisende, Reinigungsvorrichtungen 100, 100', 100" gemäß dem Konzept der Erfindung, insbesondere die in Fig. 2, Fig. 3 und Fig. 4 gezeigten Ausführungsformen, im Rahmen der Erfindung in Form eines der hier gezeigten Sensorreinigungsmodule 200, 200', 200" auszubilden.

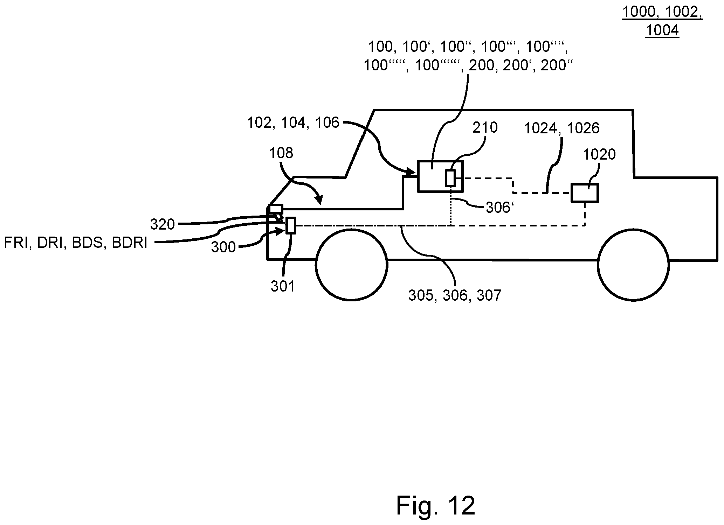

Fig. 12 zeigt eine schematische Darstellung eines Fahrzeugs 1000, insbesondere eines PKW 1002 oder Nutzfahrzeugs 1004 - vorliegend in Form eines autonomen oder teilautonomen Fahrzeugs - aufweisend eine Reinigungsvorrichtung 100, 100", 100‴, 100"", 100‴ʺ, 100‴‴ für einen als optischen Sensor, beispielsweise als Kamera, ausgebildeten Sensor 301. Gleichwohl ist ein Einsatz der Reinigungsvorrichtung 100 in anderen Fahrzeugen möglich.

Die Reinigungsvorrichtung 100, 100", 100'", 100ʺʺ, 100‴ʺ, 100‴‴ ist insbesondere als ein Sensorreinigungsmodul 200, 200', 200" ausgebildet. Die Reinigungsvorrichtung 100 weist eine Modulsteuereinheit 210 auf, welche mit einer Fahrzeugsteuereinheit 1020 über eine Fahrzeugsteuerleitung 1024 signalführend verbunden ist. Die Fahrzeugsteuerleitung 1024 ist insbesondere als ein Fahrzeugbus 1026, insbesondere CAN-Bus, ausgebildet.

Der Sensor 301 ist über eine Sensorleitung 306 mit der Fahrzeugsteuereinheit 1020 signalführend zur Übermittlung von Sensorsignalen 305 verbunden. Insbesondere kann ein Reinigungsprüfsignal 307 zum Feststellen, ob eine Reinigung der Sensoroberfläche 300 erfolgt ist, insbesondere ob ein Flüssigkeits-Reinigungsimpuls FRI abgegeben wurde, über die Sensorleitung 306 an die Fahrzeugsteuereinheit 1020 übermittelt werden. Ein Reinigungsprüfsignal 307 kann bei einem als Kamera ausgebildeten Sensor 301 insbesondere mit Mitteln der Bildverarbeitung generiert werden, beispielsweise durch das Feststellen einer Verbesserung der Signalqualität des Sensorsignals oder von Flüssigkeitspartikeln im Kamerabild. In Ausführungsformen kann alternativ oder zusätzlich eine Sensorleitung 306' zwischen dem Sensor 301 und der Modulsteuereinheit 210, insbesondere zur Übermittlung des Reinigungsprüfsignals 307, vorgesehen sein.

Die Reinigungsdüse 320 ist zum Beaufschlagen der Sensoroberfläche 300 mit einem Flüssigkeits-Reinigungsimpuls FRI und/oder einem Druckluft-Reinigungsimpuls und/oder einer Bypass-Druckluftströmung BDS und/oder einem Bypass-Druckluft-Reinigungsimpuls BDRI ausgebildet. Die Reinigungsdüse 320 ist über einen Düsen-Flüssigkeitsanschluss 102 und/oder einen Düsen-Druckluftanschluss 104 und/oder einen Düsen-Kombinationsanschluss 106 fluidführend mit der Reinigungsvorrichtung 100 verbunden. In Ausführungsformen, in denen die Reinigungsdüse 320 nicht direkt an der Reinigungsvorrichtung 100 oder dem Sensorreinigungsmodul 200 angeordnet ist, kann die Reinigungsdüse 320 über eine Düsenanschlussleitung 108 fluidführend mit dem Düsen-Flüssigkeitsanschluss 102 und/oder dem Düsen-Druckluftanschluss 104 und/oder dem Düsen-Kombinationsanschluss 106 verbunden werden.

### BEZUGSZEICHENLISTE (Teil der Beschreibung)

- 99: Reinigungsvorrichtung
- 100, 100", 100‴, 100ʺʺ, 100‴ʺ: Reinigungsvorrichtung
- 102: Düsen-Flüssigkeitsanschluss
- 104: Düsen-Druckluftanschluss
- 106: Düsen-Kombinationsanschluss
- 106.-3: erster bis dritter Düsen-Kombinationsanschluss
- 108: Düsenanschlussleitung
- 108.1: Flüssigkeits-Düsenanschlussleitung
- 108.2: Druckluft-Düsenanschlussleitung
- 200, 200', 200": Sensorreinigungsmodul
- 200.2: weiteres Sensorreinigungsmodul
- 210: Modulsteuereinheit
- 210.2: weitere Modulsteuereinheit
- 212.1-3: erste bis dritte Düsenventil-Steuerleitung
- 212.4: Schaltventil-Steuerleitung
- 212.5: Bypassventil-Steuerleitung
- 214: Modulkommunikationsleitung
- 220: Druckzylinder
- 222: Luftkammer
- 222.1: Luftkammer-Anschluss
- 224: Flüssigkeitskammer
- 224.1: Flüssigkeitskammer-Anschluss
- 225: Luftkammer-Leitung
- 226: Trennmittel
- 227: Zylinderstempel
- 228: Rückstellfeder
- 260: Modulspeicher
- 270: Schaltventil
- 270A: Belüftungsstellung des Schaltventils
- 270B: Entlüftungsstellung des Schaltventils
- 270C: Bypassstellung des Kombinationsventils
- 272: Moduldruckluftanschluss
- 273: Druckluft-Anschlussleitung
- 278: Druckluft-Düsenleitung
- 280: Moduldruckluftspeicher
- 290: Modulgehäuse
- 292: Ventilpatronengehäuse
- 296: Ventilsitz
- 300: Sensoroberfläche
- 300.1-3: erste bis dritte Sensoroberfläche
- 301: Sensor
- 305: Sensorsignal
- 306: Sensorleitung
- 307: Reinigungsprüfsignal
- 318: Medienzusammenführung
- 320: Reinigungsdüse
- 320.1-3: erste bis dritte Reinigungsdüse
- 330: Bypassventil
- 331: Ventilkolben
- 332: 2/2-Wegeventil
- 332A: Schließstellung des 2/2-Wegeventils
- 332B: Öffnungsstellung des 2/2-Wegeventils
- 332.1: erster Anschluss des 2/2-Wegeventils
- 332.2: zweiter Anschluss des 2/2-Wegeventils
- 332.3: Steuerdruckleitung des 2/2-Wegeventils
- 333: 2/2-Wege-Magnetventil
- 334: 3/2-Wegeventil
- 334A: Schließstellung des 3/2-Wegeventils
- 334B: Öffnungsstellung des 3/2-Wegeventils
- 334.1: erster Anschluss des 3/2-Wegeventils
- 334.2: zweiter Anschluss des 3/2-Wegeventils
- 334.3: Entlüftungsanschluss des 3/2-Wegeventils
- 334.4: Steuerdruckleitung des 3/2-Wegeventils
- 335: Kombinationsventil
- 336: Patronenventil
- 337: 3/3-Wegeventil
- 340: Schnellentlüftungsventil
- 340.1: erster Anschluss des Schnellentlüftungsventils
- 340.2: zweiter Anschluss des Schnellentlüftungsventils
- 340.3: dritter Anschluss des Schnellentlüftungsventils
- 340.4: Ventilkörper
- 340.5: Schnellentlüftungsventil-Steuerleitung
- 340': weiteres Schnellentlüftungsventil
- 340": noch weiteres Schnellentlüftungsventil
- 341: Druckluftpuffer
- 348: Magnetanker
- 349: Rückschlagventil
- 349.1: erster Anschluss des Rückschlagventils
- 349.2: zweiter Anschluss des Rückschlagventils
- 349.3: Ventilfeder des Rückschlagventils
- 349.4: Ventilkörper des Rückschlagventils
- 349.5: Ventilsitz des Rückschlagventils
- 350: Ansaugdruck-Rückschlagventil

- 352: Flüssigkeitsimpuls-Rückschlagventil
- 354: Druckluftimpuls-Rückschlagventil
- 356: Bypass-Rückschlagventil
- 358: Düsenleitungs-Rückschlagventil
- 400: Flüssigkeitsquelle
- 600: Druckluftquelle
- 602: Kompressor
- 604: zentraler Druckluftspeicher
- 606: Druckluftversorgungsanlage
- 618: Modulflüssigkeitsanschluss
- 619: Zylinder-Anschlusspunkt
- 620: Flüssigkeitszuleitung
- 621: Bypass-Anschlusspunkt
- 623: Bypassleitung
- 624: Düsenleitungs-Zusammenführung
- 626: Flüssigkeits-Düsenleitung
- 628: Kombinations-Düsenleitung
- 630: Düsenleitungs-Verteilpunkt
- 632: Düsen-Zweigleitung
- 632.1-3: erste bis dritte Düsen-Zweigleitung
- 640: Düsenventil
- 640.1-3: erstes bis drittes Düsenventil
- 1000: Fahrzeug
- 1002: PKW
- 1004: Nutzfahrzeug
- 1020: Fahrzeugsteuereinheit
- 1022: Steuersignal
- 1024: Fahrzeugsteuerleitung
- 1026: Fahrzeugbus

- AZ: Zylinderachse des Druckzylinders
- BDS: Bypass-Druckluftströmung
- BDRI: Bypass-Druckluft-Reinigungsimpuls
- DL: Druckluft
- DRI: Druckluft-Reinigungsimpuls
- DSS: Druckluftsteuerungssignal
- F: Reinigungsflüssigkeit
- FRI: Flüssigkeits-Reinigungsimpuls
- PST: Steuerdruck
- VZ: Zylindervolumen

## Patentansprüche

1. Reinigungsvorrichtung (100) für ein Fahrzeug (1000) zum Bereitstellen eines Flüssigkeits-Reinigungsimpulses (FRI) und/oder eines Druckluft-Reinigungsimpulses (DRI) für mindestens eine Reinigungsdüse (320), aufweisend:
- einen Moduldruckluftanschluss (272) zum Annehmen von Druckluft (DL),
- einen Druckzylinder (220) mit einem Zylindervolumen (VZ), aufweisend ein bewegliches Trennmittel (226), das das Zylindervolumen (VZ) in eine Druckluft (DL) aufnehmende Luftkammer (222) und eine Reinigungsflüssigkeit (F) aufnehmende Flüssigkeitskammer (224) fluiddicht aufteilt, wobei
- die Luftkammer (222) einen Luftkammer-Anschluss (222.1) aufweist, der mit Druckluft (DL) zum Füllen der Luftkammer (222) beaufschlagbar ist, wobei bei einem Füllen der Luftkammer (222) durch Bewegen des Trennmittels (226) gegen eine Rückstellkraft (FR) und Vergrößern der Luftkammer (222) ein Verkleinern der Flüssigkeitskammer (224) erfolgt, wodurch Reinigungsflüssigkeit (F) in Form des Flüssigkeits-Reinigungsimpulses (FRI) über einen Flüssigkeitskammer-Anschluss (224.1) der Flüssigkeitskammer (224) an einer Flüssigkeits-Düsenleitung (626) bereitgestellt wird,
**gekennzeichnet durch**
- ein Schaltventil (270), das ausgebildet ist zum Herstellen einer pneumatischen Verbindung zwischen dem Moduldruckluftanschluss (272) und dem Luftkammer-Anschluss (222.1) in einer Belüftungsstellung (270A), und
- ein Bypassventil (330), das ausgebildet ist zum Herstellen einer pneumatischen Verbindung zwischen dem Moduldruckluftanschluss (272) und der Druckluft-Düsenleitung (278) vorbei an dem Schaltventil (270) in einer Öffnungsstellung (330B, 332B, 334B) zum Bereitstellen einer Bypass-Druckluftströmung (BDS).

2. Reinigungsvorrichtung (100) nach Anspruch 1, **dadurch gekennzeichnet, dass** das Bypassventil (330) als ein 2/2-Wegeventil (332), insbesondere 2/2-Wege-Magnetventil (333) und/oder Patronenventil (336), ausgebildet ist.

3. Reinigungsvorrichtung (100) nach Anspruch 1, **dadurch gekennzeichnet, dass** das Bypassventil (330') als eine Anordnung aus einem 3/2 Wegeventil (334) und einem Schnellentlüftungsventil (340) gebildet ist, wobei
- das 3/2 Wegeventil (334) ausgebildet ist zum Herstellen einer pneumatischen Verbindung zwischen dem Moduldruckluftanschluss (272) und dem Schnellentlüftungsventil (340) in einer Öffnungsstellung (334A), und zum Herstellen einer pneumatischen Verbindung zwischen dem Schnellentlüftungsventil (340) und einem Entlüftungsanschluss (334.3) des 3/2 Wegeventils (334) in einer Schließstellung (334B),
- das Schnellentlüftungsventil (340) zwischen dem Bypassventil (330) und der Druckluft-Düsenleitung (278) oder in einer, die Reinigungsdüse (320) mit der Reinigungsvorrichtung (100‴) pneumatisch verbindenden, Druckluft-Düsenanschlussleitung (108.2) angeordnet und ausgebildet ist zum Annehmen der Bypass-Druckluftströmung (BDS) und zum Bereitstellen eines Bypass-Druckluft-Reinigungsimpulses (BDRI).

4. Reinigungsvorrichtung (100) nach einem der vorherigen Ansprüche, **dadurch gekennzeichnet, dass**
- das Schaltventil (270) und das Bypassventil (330) als ein Kombinationsventil (335) ausgebildet sind, wobei das Kombinationsventil (335) als 3/3-Wegeventil (337) ausgebildet ist.

5. Reinigungsvorrichtung (100) nach einem der vorherigen Ansprüche, **gekennzeichnet durch**:
- einen Modulspeicher (260) zum Speichern von Reinigungsflüssigkeit (F), und/oder
- eine Modulsteuereinheit (210) ausgebildet zum Ansteuern des Schaltventils (270) und/oder des Bypassventils (330), und/oder
- einen Moduldruckluftspeicher (280) ausgebildet zum Speichern von Druckluft (DL).

6. Reinigungsvorrichtung (100) nach einem der vorherigen Ansprüche, **gekennzeichnet durch**:
- eine Düsenleitungs-Zusammenführung (624), die ausgebildet ist, die Flüssigkeits-Düsenleitung (626) und die Druckluft-Düsenleitung (278) fluidführend zu einer Kombinations-Düsenleitung (628) zu verbinden.

7. Reinigungsvorrichtung (100) nach einem der vorherigen Ansprüche, **gekennzeichnet durch**:
- einen Düsenleitungs-Verteilpunkt (630), der ausgebildet ist, die Kombinations-Düsenleitung (628) und/oder die Flüssigkeits-Düsenleitung (626) und/oder die Druckluft-Düsenleitung (278) in mehrere Düsen-Zweigleitungen (623, 623.1, 623.2, 623.3) aufzuteilen.

8. Reinigungsvorrichtung (100) nach Anspruch 6 oder 7, **gekennzeichnet durch**:
- in ein der Kombinations-Düsenleitung (628) und/oder der Düsen-Zweigleitung (623, 623.1, 623.2, 623.3) angeordnetes Düsenventil (640, 640.1, 640.2, 640.3).

9. Reinigungsvorrichtung (100) nach einem der vorherigen Ansprüche, **gekennzeichnet durch**:
- eine Reinigungsdüse (320) zum Beaufschlagen einer Sensoroberfläche (300) mit dem Flüssigkeits-Reinigungsimpuls (FRI) und/oder dem Druckluft-Reinigungsimpuls (DRI), wobei die Reinigungsdüse (320) fluidführend mit der Druckluft-Düsenleitung (278) und/oder der Flüssigkeits-Düsenleitung (626) und/oder der Kombinations-Düsenleitung (628) und/oder der Düsen-Zweigleitung (632) verbunden ist.

10. Reinigungsvorrichtung (100) nach einem der vorherigen Ansprüche, **dadurch gekennzeichnet, dass**:
- das Trennmittel (226) ein axial entlang einer Zylinderachse (AZ) bewegbarer und dichtend an einer Zylinderinnenwand (221) des Druckzylinders (220) anliegender Zylinderstempel (227) ist, wobei der Zylinderstempel (227) mit einer Rückstellfeder (228) zum Erzeugen der Rückstellkraft (FR) im Druckzylinder (220) gehalten wird.

11. Reinigungsvorrichtung (100) nach einem der vorherigen Ansprüche, **gekennzeichnet durch** eine Modulsteuereinheit (210), die ausgebildet ist zum Ansteuern der Ventile der Reinigungsvorrichtung (100), insbesondere des Schaltventils (270) und/oder des Bypassventils (330) und/oder des Düsenventils (640, 640.1, 640.2, 640.3), und/oder
- ausgebildet ist zur Kommunikation zwischen der Reinigungsvorrichtung (100), und einer Fahrzeugsteuereinheit (1020) des Fahrzeugs (1000), insbesondere über einen Fahrzeugbus (1026).

12. Sensorreinigungsmodul (200), aufweisend ein Modulgehäuse (290), insbesondere ein Ventilpatronengehäuse (292), und eine Reinigungsvorrichtung (100) nach einem der vorherigen Ansprüche.

13. Fahrzeug (1000), insbesondere PKW (1002) oder Nutzfahrzeug (1004), aufweisend mindestens eine Reinigungsvorrichtung (100) nach einem der Ansprüche 1 bis 10 und/oder ein Sensorreinigungsmodul (200) nach Anspruch 12.

14. Verfahren zum Betreiben einer Reinigungsvorrichtung (100) nach einem der Ansprüche 1 bis 11 und/oder eines Sensorreinigungsmoduls (200) nach Anspruch 12, **gekennzeichnet durch** die Reinigungsschritte:
- Schalten des Schaltventils (270) in eine Belüftungsstellung (270A) zum Beaufschlagen des Luftkammer-Anschlusses (222.1) zum Bereitstellen des Flüssigkeits-Reinigungsimpulses (FRI) an der Flüssigkeits-Düsenleitung (626),
- Schalten des Schaltventils (270) in eine Entlüftungsstellung (270B) zum Entlüften des Luftkammer-Anschlusses (222.1), und
- Zurückbewegen des Trennmittels (226) durch die Rückstellkraft (FR) zum Bereitstellen des Druckluft-Reinigungsimpulses (DRI) an der Druckluft-Düsenleitung (278) und zum Wiederauffüllen der Flüssigkeits-Kammer (224) mit Reinigungsflüssigkeit (F).

15. Verfahren nach Anspruch 14, weiter aufweisend die Schritte:
- Prüfen anhand eines Reinigungs-Prüfsignals (307) des Sensors (301), ob eine Reinigung der Sensoroberfläche (300) erfolgt ist, insbesondere ob ein Flüssigkeits-Reinigungsimpuls (FRI) auf die Sensoroberfläche (300) abgegeben wurde,
- Bereitstellen eines negativen Reinigungs-Prüfsignals (307), wenn keine Reinigung der Sensoroberfläche (300) erfolgt ist, insbesondere wenn kein Flüssigkeits-Reinigungsimpuls (FRI) auf die Sensoroberfläche (300) abgegeben wurde und
- einfaches oder mehrfaches Wiederholen der Schritte gemäß Anspruch 13, wenn das Reinigungs-Prüfsignal (307) negativ ist.

16. Verfahren nach Anspruch 14 oder 15, weiter aufweisend die Schritte:
- Schalten des Bypassventils (330, 332, 334) in eine Öffnungsstellung (330B, 332B, 334B) zum Erzeugen einer Bypass-Druckluftströmung (BDS),
- Schalten des Bypassventils (330, 332, 334) in eine Schließstellung (330A, 332A, 334A), insbesondere zum Erzeugen eines Bypass-Druckluft-Reinigungsimpulses (BDRI).

## Claims

1. Cleaning device (100) for a vehicle (1000) for providing a liquid cleaning pulse (FRI) and/or a compressed air cleaning pulse (DRI) for at least one cleaning nozzle (320), having:
- a module compressed air connection (272) for receiving compressed air (DL),
- a pressure cylinder (220) with a cylinder volume (VZ), having a movable separating means (226) which divides the cylinder volume (VZ) into a compressed air (DL) receiving chamber (222) and a cleaning liquid (F) receiving chamber (224) in a fluid-tight manner, wherein
- the air chamber (222) has an air chamber connection (222.1) which can be subjected to compressed air (DL) for filling the air chamber (222), wherein when filling the air chamber (222) contraction of the liquid chamber (224) occurs by moving the separating means (226) against a restoring force (FR) and expanding the air chamber (222), whereby cleaning liquid (F) in the form of the liquid cleaning pulse (FRI) is provided to a liquid nozzle line (626) via a liquid chamber connection (224.1) of the liquid chamber (224),
**characterized by**
- a switching valve (270), which is designed for establishing a pneumatic connection between the module compressed air connection (272) and the air chamber connection (222.1) in a ventilation position (270A), and
- a bypass valve (330), which is designed for establishing a pneumatic connection between the module compressed air connection (272) and the compressed air nozzle line (278) while bypassing the switching valve (270) in an open position (330B, 332B, 334B) for providing a bypass compressed air flow (BDS).

2. Cleaning device (100) according to Claim 1, **characterized in that** the bypass valve (330) is in the form of a 2/2-way valve (332), in particular a 2/2-way solenoid valve (333) and/or a cartridge valve (336).

3. Cleaning device (100) according to Claim 1, **characterized in that** the bypass valve (330') is formed as an arrangement of a 3/2-way valve (334) and a quick exhaust valve (340), wherein
- the 3/2-way valve (334) is designed for establishing a pneumatic connection between the module compressed air connection (272) and the quick exhaust valve (340) in an open position (334A), and for establishing a pneumatic connection between the quick exhaust valve (340) and a venting connection (334.3) of the 3/2-way valve (334) in a closed position (334B),
- the quick exhaust valve (340) is arranged between the bypass valve (330) and the compressed air nozzle line (278) or in a compressed air nozzle connection line (108.2) pneumatically connecting the cleaning nozzle (320) to the cleaning device (100‴) and is designed for receiving the bypass compressed air flow (BDS) and for providing a bypass compressed air cleaning pulse (BDRI).

4. Cleaning device (100) according to any one of the preceding claims, **characterized in that**
- the switching valve (270) and the bypass valve (330) are in the form of a combination valve (335), wherein the combination valve (335) is in the form of a 3/3-way valve (337) .

5. Cleaning device (100) according to any one of the preceding claims, **characterized by**:
- a module accumulator (260) for storing cleaning liquid (F), and/or
- a module control unit (210) designed for controlling the switching valve (270) and/or the bypass valve (330), and/or
- a module compressed air accumulator (280) designed for storing compressed air (DL).

6. Cleaning device (100) according to any one of the preceding claims, **characterized by**:
- a nozzle line junction (624), which is designed to fluidically connect the liquid nozzle line (626) and the compressed air nozzle line (278) to a combination nozzle line (628).

7. Cleaning device (100) according to any one of the preceding claims, **characterized by**:
- a nozzle line distribution point (630), which is designed to divide the combination nozzle line (628) and/or the liquid nozzle line (626) and/or the compressed air nozzle line (278) into multiple nozzle branch lines (623, 623.1, 623.2, 623.3).

8. Cleaning device (100) according to Claim 6 or 7, **characterized by**:
- a nozzle valve (640, 640.1, 640.2, 640.3) arranged in the combination nozzle line (628) and/or the nozzle branch line (623, 623.1, 623.2, 623.3).

9. Cleaning device (100) according to any one of the preceding claims, **characterized by**:
- a cleaning nozzle (320) for subjecting a sensor surface (300) to the liquid cleaning pulse (FRI) and/or the compressed air cleaning pulse (DRI), wherein the cleaning nozzle (320) is fluidically connected to the compressed air nozzle line (278) and/or the liquid nozzle line (626) and/or the combination nozzle line (628) and/or the nozzle branch line (632).

10. Cleaning device (100) according to any one of the preceding claims, **characterized in that**:
- the separating means (226) is a cylinder plunger (227) axially movable along a cylinder axis (AZ) and contacting a cylinder inner wall (221) of the pressure cylinder (220) in a sealing manner, wherein the cylinder plunger (227) is held in the pressure cylinder (220) with a return spring (228) for generating the restoring force (FR) .

11. Cleaning device (100) according to any one of the preceding claims, **characterized by** a module control unit (210), which is designed for controlling the valves of the cleaning device (100), in particular the switching valve (270) and/or the bypass valve (330) and/or the nozzle valve (640, 640.1, 640.2, 640.3), and/or
- is designed for communication between the cleaning device (100) and a vehicle control unit (1020) of the vehicle (1000), in particular via a vehicle bus (1026).

12. Sensor cleaning module (200) having a module housing (290), in particular a valve cartridge housing (292), and a cleaning device (100) according to any one of the preceding claims.

13. Vehicle (1000), in particular a passenger car (1002) or a commercial vehicle (1004), having at least one cleaning device (100) according to any one of Claims 1 to 10 and/or a sensor cleaning module (200) according to Claim 12.

14. Method for operating a cleaning device (100) according to any one of Claims 1 to 11 and/or a sensor cleaning module (200) according to Claim 12, **characterized by** the cleaning steps:
- switching the switching valve (270) to a ventilation position (270A) for supplying the air chamber connection (222.1) for providing the liquid cleaning pulse (FRI) to the liquid nozzle line (626),
- switching the switching valve (270) to a venting position (270B) for venting the air chamber connection (222.1), and
- moving the separating means (226) back by means of the restoring force (FR) for providing the compressed air cleaning pulse (DRI) to the compressed air nozzle line (278) and for refilling the liquid chamber (224) with cleaning liquid (F).

15. Method according to Claim 14, further having the steps:
- checking on the basis of a cleaning check signal (307) of the sensor (301) whether cleaning of the sensor surface (300) has taken place, in particular whether a liquid cleaning pulse (FRI) has been delivered to the sensor surface (300),
- providing a negative cleaning check signal (307) if no cleaning of the sensor surface (300) has been carried out, in particular if no liquid cleaning pulse (FRI) has been delivered to the sensor surface (300) and
- one or more repetitions of the steps according to Claim 13 if the cleaning check signal (307) is negative.

16. Method according to Claim 14 or 15, further having the steps:
- switching the bypass valve (330, 332, 334) to an open position (330B, 332B, 334B) for generating a bypass compressed air flow (BDS),
- switching the bypass valve (330, 332, 334) to a closed position (330A, 332A, 334A), in particular for generating a bypass compressed air cleaning pulse (BDRI).

## Revendications

1. Dispositif de nettoyage (100) pour un véhicule (1000) destiné à fournir une impulsion de nettoyage par liquide (FRI) et/ou une impulsion de nettoyage par air comprimé (DRI) à au moins une buse de nettoyage (320), comprenant :
- un raccord (272) d'air comprimé de module pour recevoir de l'air comprimé (DL),
- un cylindre de pression (220) ayant un volume de cylindre (VZ), comprenant un moyen de séparation mobile (226) qui divise de manière étanche au fluide le volume de cylindre (VZ) en une chambre (222) pour de l'air recevant de l'air comprimé (DL) et une chambre à liquide (224) recevant un liquide de nettoyage (F), dans lequel
- la chambre (222) pour de l'air présente un raccord (222.1) de chambre pour de l'air, qui est apte à être alimenté en air comprimé (DL) de façon à remplir la chambre (222) pour de l'air, grâce à quoi, lors d'un remplissage de la chambre (222) pour de l'air par déplacement du moyen de séparation (226) à l'encontre d'une force de rappel (FR) et agrandissement de la chambre (222) pour de l'air, il se produit une réduction de la chambre à liquide (224), ce qui fait que du liquide de nettoyage (F) sous forme de l'impulsion de nettoyage par liquide (FRI) envoyé, par un raccord (224.1) de chambre à liquide, depuis la chambre à liquide (224) jusqu'à une conduite (626) de buse à liquide, **caractérisé par**
- une vanne de commutation (270) adaptée pour établir une communication pneumatique entre le raccord (272) d'air comprimé de module et le raccord (222.1) de la chambre pour de l'air dans une position d'alimentation en air (270A), et
- une vanne de dérivation (330) adaptée pour établir une communication pneumatique entre le raccord (272) d'air comprimé de module et la conduite de buse à air comprimé (278) en passant par la vanne de commutation (270) dans une position d'ouverture (330B, 332B, 334B) pour fournir un flux d'air comprimé de dérivation (BDS).

2. Dispositif de nettoyage (100) selon la revendication 1, **caractérisé en ce que** la vanne de dérivation (330) est réalisée sous la forme d'un distributeur magnétique à 2/2 voies (332), notamment d'une distributeur magnétique à 2/2 voies (333) et/ou d'un distributeur à cartouche (336).

3. Dispositif de nettoyage (100) selon la revendication 1, **caractérisé en ce que** la vanne de dérivation (330') est réalisée sous la forme d'un ensemble distributeur à 3/2 voies (334) et une vanne de purge rapide (340), dans lequel
- le distributeur à 3/2 voies (334) est conçu de façon à établir une communication pneumatique entre le raccord (272) d'air comprimé de module et la vanne de purge rapide (340) dans une position d'ouverture (334A), et à établir une communication pneumatique entre la vanne de purge rapide (340) et un raccord de purge (334.3) du distributeur à 3/2 voies (334) dans une position de fermeture (334B),
- la vanne de purge rapide (340) est placée entre la vanne de dérivation (330) et la conduite de buse à air comprimé (278) ou dans une conduite (108.2) de raccordement de buse d'air comprimé reliant pneumatiquement la buse de nettoyage (320) au dispositif de nettoyage (100') et est conçue de façon à accepter le flux d'air comprimé de dérivation (BDS) et à fournir une impulsion de nettoyage d'air comprimé de dérivation (BDRI) .

4. Dispositif de nettoyage (100) selon l'une des revendications précédentes, **caractérisé en ce que**
- la vanne de commutation (270) et la vanne de dérivation (330) sont réalisées sous la forme d'une vanne combinée (335), la vanne combinée (335) étant réalisée sous la forme d'un distributeur à 3/3 voies (337).

5. Un dispositif de nettoyage (100) selon l'une des revendications précédentes, **caractérisé par** :
- un réservoir de module (260) pour stocker le liquide de nettoyage (F), et/ou
- une unité (210) de commande de module, conçue de façon à commander la vanne de commutation (270) et/ou la vanne de dérivation (330), et/ou
- un accumulateur (280) d'air comprimé de module conçu pour stocker de l'air comprimé (DL).

6. Dispositif de nettoyage (100) selon l'une des revendications précédentes, **caractérisé par** :
- une jonction (624) de conduite de buse qui est conçue de façon à relier la conduite (626) de buse de liquide et la conduite de buse à air comprimé (278) en guidant le fluide de façon à former une conduite de buse combinée (628).

7. Dispositif de nettoyage (100) selon l'une des revendications précédentes, **caractérisé par** :
- un point de distribution (630) de conduite de buse conçu de façon à diviser la conduite de buse combinée (628) et/ou la conduite de buse à liquide (626) et/ou la conduite de buse à air comprimé (278) en une pluralité de conduites de dérivation de buse (623, 623.1, 623.2, 623.3) .

8. Dispositif de nettoyage (100) selon la revendication 6 ou la revendication 7, **caractérisé par** :
- une vanne de buse (640, 640.1, 640.2, 640.3) disposée dans la conduite de buse combinée (628) et/ou dans la conduite de dérivation de buse (623, 623.1, 623.2, 623.3).

9. Dispositif de nettoyage (100) selon l'une des revendications précédentes, **caractérisé par** :
- une buse de nettoyage (320) pour appliquer l'impulsion de nettoyage par liquide (FRI) et/ou l'impulsion de nettoyage par air comprimé (DRI) à une surface de capteur (300), la buse de nettoyage (320) étant reliée par guidage de fluide à la conduite de buse à air comprimé (278) et/ou à la conduite de buse à liquide (626) et/ou à la conduite de buse combinée (628) et/ou à la conduite de dérivation de buse (632).

10. Dispositif de nettoyage (100) selon l'une des revendications précédentes, **caractérisé en ce que** :
- le moyen de séparation (226) est un tampon de cylindre (227) mobile axialement le long d'un axe de cylindre (AZ) et en appui étanche contre une paroi interne (221) du cylindre de pression (220), le tampon de cylindre (227) étant maintenu dans le cylindre de pression (220) par un ressort de rappel (228) destiné à générer la force de rappel (FR).

11. Dispositif de nettoyage (100) selon l'une des revendications précédentes, **caractérisé par** une unité (210) de commande de module qui est conçue de façon à commander les vannes du dispositif de nettoyage (100), en particulier la vanne de commutation (270) et/ou la vanne de dérivation (330) et/ou la vanne de buse (640, 640.1, 640.2, 640.3), et/ou
- est conçue pour une communication entre le dispositif de nettoyage (100), et une unité (1020) de commande de véhicule (1000), notamment par l'intermédiaire d'un bus de véhicule (1026).

12. Module (200) de nettoyage de capteur, comprenant un boîtier de module (290), notamment un boîtier (292) de cartouche de vanne, et un dispositif de nettoyage (100) selon l'une quelconque des revendications précédentes.

13. Véhicule (1000), notamment voiture (1002) ou véhicule utilitaire (1004), comportant au moins un dispositif de nettoyage (100) selon l'une des revendications 1 à 10 et/ou un module (200) de nettoyage de capteur selon la revendication 12.

14. Procédé de mise en œuvre d'un dispositif de nettoyage (100) selon l'une des revendications 1 à 11 et/ou d'un module (200) de nettoyage de capteur selon la revendication 12, **caractérisé par** les étapes de nettoyage suivantes :
- commutation de la vanne de commutation (270) dans une position d'alimentation en air (270A) pour alimenter le raccord (222.1) de la chambre pour de l'air afin de fournir l'impulsion de nettoyage par liquide (FRI) à la conduite de buse à liquide (626),
- commutation de la vanne de commutation (270) dans une position de purge (270B) pour purger le raccord (222.1) de la chambre pour de l'air, et
- déplacement en retour du moyen de séparation (226) par la force de rappel (FR) de façon à fournir l'impulsion de nettoyage à l'air comprimé (DRI) au niveau de la conduite de buse à air comprimé (278) et pour remplir à nouveau la chambre à liquide (224) avec du liquide de nettoyage (F).

15. Procédé selon la revendication 14, comprenant en outre les étapes consistant à :
- vérifier, en utilisant un signal de contrôle de nettoyage (307) provenant du capteur (301), si un nettoyage de la surface du capteur (300) a été effectué, en particulier si une impulsion de nettoyage par liquide (FRI) a été délivrée sur la surface du capteur (300),
- fournir un signal négatif (307) de contrôle de nettoyage si aucun nettoyage de la surface du capteur (300) n'a été effectué, en particulier si aucune impulsion de nettoyage par liquide (FRI) n'a été délivrée sur la surface du capteur (300), et
- répéter une ou plusieurs fois les étapes de la revendication 13 si le signal de contrôle de nettoyage (307) est négatif.

16. Procédé selon la revendication 14 ou la revendication 15, comprenant en outre les étapes suivantes :
- commutation de la vanne de dérivation (330, 332, 334) vers une position d'ouverture (330B, 332B, 334B) pour générer un flux d'air comprimé de dérivation (BDS),
- commutation de la vanne de dérivation (330, 332, 334) dans une position de fermeture (330A, 332A, 334A), en particulier pour générer une impulsion de nettoyage par air comprimé en dérivation (BDRI).
